# EUROPEAN PATENT SPECIFICATION

(11) **EP 0 927 200 B1**
(45) Date of publication and mention of the grant of the patent: **22.04.2009**
(21) Application number: 97943447.9
(22) Date of filing: 23.09.1997
(51) Int. Cl.: C08F 4/44, C08F 24/00, C09D 175/00, C09D 4/00

(54) **POLYURETHANE/VINYL DIOXOLANE BASED COATING COMPOSITIONS**
BESCHICHTUNGSZUSAMMENSETZUNGEN BASIEREND AUF POLYURETHAN/VINYLDIOXOLAN
COMPOSITIONS DE REVETEMENT A BASE DE POLYURETHANE/DIOXOLANE DE VINYLE

(30) Priority: 23.09.1996 US 717792
(43) Date of publication of application: 07.07.1999
(73) Proprietor: FOSTER-MILLER INC., Waltham, MA 02254 (US)
(72) Inventor: KOVAR, Robert, F., Wrentham, MA 02093 (US); DOROGY, William, E., Jr., Hudson, MA 01749 (US); FARRELL, Brian, P., Dorchester, MA 02122 (US); LANDRAU, Nelson, Marlborough, MA 01752 (US)
(74) Representative: Prinz & Partner
(86) International application number: PCT/US1997/016858
(87) International publication number: WO 1998/012233

(56) References cited:
- US-A- 3 010 923
- US-A- 4 009 129
- US-A- 4 182 848
- US-A- 4 358 476

## Description

This invention relates to polyurethane/vinyl dioxolane based coating compositions containing no or essentially no volatile organic components (VOCs) and coatings formed therefrom.

### BACKGROUND OF THE INVENTION

There is much interest in reducing, preferably eliminating VOCs, such as organic solvents, particularly in sprayable coating compositions. One factor which has promoted this interest is the need to reduce atmospheric pollution caused by the evaporation of these solvents during application and cure of coating compositions containing them. Such organic solvents are used in sprayable coating compositions to achieve the desired viscosity for coating applications.

High performance coating compositions, e.g., for use in coating military aircraft, currently release substantial amounts of VOCs to the atmosphere during application and cure. Since VOCs are typically toxic, smog-producing and noxious, their continued release can cause a detrimental impact on worker safety and the environment. New methods for greatly reducing or eliminating VOCs during the application of such high performance coatings are urgently needed to prevent worker injury and comply with current and pending environmental regulations. Of equal importance is the cost, performance and durability of such coating formulations.

Polyurethanes are of particular interest in high performance coatings because of their combination of useful properties, including flexibility, excellent adhesion to most substrates, abrasion-resistance, LTV-resistance, weather-resistance, variable hardness from elastomer to tough plastic, moderate cost, availability as two-component, moisture-cured and aqueous-based, dispersion systems, and low temperature flexibility.

Polyurethanes consist of urethane linkages formed by the reaction of isocyanates with molecules containing hydroxyl groups or other groups with active hydrogens in the presence of catalyst, usually organic tin compounds, such as stannous octoate and dibutyltin dilaurate or tertiary amines, such as 1,4-diazabicyclo(2.2.2)octane (DABCO). The bulk of the polyurethanes used worldwide are based on two aromatic isocyanates: toluene diisocyanate (TDI) and diphenylmethane diisocyanate (MDI). These base materials are occasionally derivatized under controlled conditions to form carbodiimide isocyanates, or reacted with low-molecular-weight glycols to form specialty prepolymers. Such derivatives can simplify materials handling, ease processing and improve foam properties. Other isocyanates such as hexamethylene diisocyanate, isophorone diisocyanate or naphthalene diisocyanate may also be used in some cases for more specialized applications. Compounds with active hydrogens which make up the other half of the polyurethane reaction system, typically consist of polyoxypropylene glycols (polyether polyols), sometimes supplemented with small amounts of low-molecular-weight glycols such as ethylene glycol or butanediol. In specific microcellular foam applications such as reaction injection molding, a diamine such as diethylene toluenediamine may be used in place of the glycols. In some cases, polyester polyols based on adipic acid and ethylene glycol or butanediol may be used instead of polyether polyols. See, e.g., Modern Plastics, Mid-November, 1993, page 79*.*

Despite the useful properties which urethane based polymeric compositions possess, they have not been widely used in sprayable coatings because of their high viscosity and the requirement for addition of substantial quantities of flammable, toxic organic solvents to polyurethane coating formulations to lower viscosity sufficiently for spraying applications. Another problem involves the use of toxic, irritating and volatile diisocyanate monomer components as major components of the polyurethane coating. The vapors that evolve from polyurethane coating operations can cause serious injury to workers breathing the fumes if they are not wearing protective equipment. Elimination of the organic solvent from polyurethane coating compositions typically results in high viscosity compositions which are not acceptable for spraying applications and/or compositions which do not form a coating having the desired properties.

Although there are water-based polyurethane dispersions which are sprayable, the coatings formed therefrom have properties inferior to properties of coatings made from solvent based or high solids polyurethanes. For example, they are susceptible to water and require high temperature drying in cure.

High solids polyurethane compositions are known that have equivalent properties to current VOC containing polyurethane coating compositions and low VOC content. However, these high solids coating compositions suffer the disadvantage of high viscosity and accordingly are difficult to apply by spraying. Furthermore, they release toxic isocyanate vapors and properties are typically not adequate to meet the requirements of high performance coatings, e.g., aircraft coatings.

A number of polyurethane coating manufacturers have been actively pursuing the development of low VOC and no VOC polyurethane coating formulations. To date however, none of these coatings has exhibited the required combination of cost, processibility and properties to justify commercialization as an improved high performance coating.

U.S. Patent No. 4,009,129 describes polymeric compositions obtained by copolymerization of a compound containing a dihydropyranyl cyclic nucleus and a particular class of cyclic acetals. In each of the examples of U.S. Patent No. 4,009,129, solvents or other volatile organic reagents are utilized.

U.S. Patent No. 4,182,848 describes curable compositions which comprise a polythiol and a polyene derived from a vinyl-acetal. The resulting product is a hydroxyl terminated prepolymer endcapped with a diisocyanate. The prepolymer material is polymeric polyethylene adipate or, alternatively, any hydroxyl terminated polyester, polyether, or polyamide.

U.S. Patent No. 4,358,476 describes radiation curable compositions comprising water, an unsaturated diluent monomer, and an olefinically unsaturated polymeric material.

There is a particularly urgent need for sprayable, 100% reactive, no VOC environmentally-compliant coatings that meet/exceed the performance of the currently used solvent-based aromatic and aliphatic polyurethane coatings while being more economical and easily-applied, without hazard to workers or the environment, particularly air-dried coatings.

Accordingly, sprayable polyurethane based coating compositions which contain no volatile organic components yet provide coatings having useful properties are desired.

### DESCRIPTION OF THE DRAWINGS

Fig. 1 shows the IR spectra of 2-vinyl-4-hydroxymethyl-1,3-dioxolane.
Fig. 2 shows the IR spectra of 2-vinyl-4-hydroxybutyl-1,3-dioxolane.
Fig. 3 shows the IR spectra of the bis(4-isocyanatocyclohexyl)methane DESMODUR W.
Fig. 4 shows the IR spectra of the 1,6-hexamethylene diisocyanate based polyisocyanate DESMODUR N 100.
Fig. 5 shows the IR spectra of the 1,6-hexamethylene diisocyanate based polyisocyanate DESMODUR N3200.
Fig. 6 shows the IR spectra of the 1,6-hexamethylene diisocyanate based polyisocyanate DESMODUR N3400.
Fig. 7 shows the IR spectra of a reaction mixture for preparing a vinyl dioxolane end-capped polyurethane oligomers for use in the present invention, the mixture comprising 2-vinyl-4-hydroxymethyl-1,3-dioxolane and DESMODUR N3200 in the presence of 0.1 % DABCO catalyst at 70°C (a) At start of experiment, (b) After 2.75 hours.
Fig. 8 shows the IR spectra of a reaction mixture for preparing a vinyl dioxolane end-capped polyurethane oligomers for use in the present invention, the mixture comprising 2-vinyl-4-hydroxymethyl-1,3-dioxolane and DESMODUR N3400 in the presence of 0. 1% DABCO catalyst at 70°C (a) At start of experiment, (b) After 5.5 hours.
Fig. 9 shows the IR spectra of a reaction mixture for preparing a vinyl dioxolane end-capped polyurethane oligomers for use in the present invention, the mixture comprising 2-vinyl-4-hydroxybutyl-1,3-dioxolane and DESMODUR W in the presence of 0.1 % DABCO catalyst at 80°C (a) At start of experiment, (b) After 8.75 hours.
Fig. 10 shows the IR spectra of a reaction mixture for preparing a vinyl dioxolane end-capped polyurethane oligomers for use in the present invention, the mixture comprising 2-vinyl-4-hydroxybutyl-1,3-dioxolane and DESMODUR N3200 in the presence of 0.1 % DABCO catalyst at 80°C (a) At start of experiment, (b) After 3.5 hours.
Fig. 11 shows the IR spectra of a reaction mixture for preparing a vinyl dioxolane end-capped polyurethane oligomer for use in the present invention, the mixture comprising 2-vinyl-4-hydroxybutyl-1,3-dioxolane with DESMODUR N3400 in the presence of 0.1 % DABCO catalyst at 80°C (a) At start of experiment, (b) After 3.75 hours.
Fig. 12 shows the IR of a coating composition of the present invention comprising the HBVD/DESMODUR N3400 oligomer of Fig. 11 with 0.5 *%* Cobalt Octoate added (a) Taken immediately after mixing, (b) Taken after 12 hours at 50°C.

### SUMMARY OF THE INVENTION

The present invention provides a new class of 100% reactive, no or essentially no VOC, environmentally-compliant, high performance polyurethane/vinyl dioxolane based coatings that meet or exceed the performance of the currently used, solvent-based polyurethane coatings while being more economical and easily-applied, without hazard to workers or the environment.

The high performance coating compositions of the present invention provide coatings which can be used to protect surfaces exposed to extreme environmental conditions, e.g., aircraft. These new coatings are essentially free of VOCs and lower in cost while providing improved protection. In addition, the coating compositions of the present invention provide protection during prolonged environmental exposure.

Coating compositions provided by the present invention are defined in claim 1.

In preferred coating compositions herein, p is at least two, n is a number from 1 to 4 and R₂, R₃, R₄ and R₅ are hydrogen.

Aliphatic polyisocyanates useful in the practice of the present invention include hexamethylene diisocyanate, 4,4-bis(cyclohexyl)methane diisocyanate, bis(4-isocyanato-cyclohexyl)mediane, isophorone diisocyanate, 1-methylcyclohexane-2,4-diisocyanate and 4,4',4"-tricyclohexylmethane triisocyanate. A preferred aliphatic polyisocyanate is a 1,6-hexamethylene diisocyanate based polyisocyanate. One such particularly preferred 1,6-hexamethylene diisocyanate based polyisocyanate has a viscosity at 23°C of from about 90 to about 250 mPa·s, such as commercially available DESMODUR N3400. Another preferred 1,6-hexamethylene diisocyanate based polyisocyanate has a viscosity at 25°C of from about 1,300 to about 2,200 mPa·s, such as commercially available DESMODUR N3200.

Preferred isocyanate end-capped aliphatic urethane prepolymers for use in the coating compositions of the present invention include such prepolymers prepared from at least one hexamethylene diisocyanate aliphatic polyester polyol or polyether polyol.

In one preferred coating composition according to the present invention the substituted vinyl dioxolane monomer is 2-vinyl-4-hydroxymethyl-1,3-dioxolane (HMVD) or 2-vinyl-4-hydroxybutyl-1,3-dioxolane (HBVD) or a blend thereof.

In a particularly preferred coating composition according to the present invention, the substituted vinyl dioxolane monomer is HBVD and the polyisocyanate is a 1,6-hexamethylene diisocyanate based polyisocyanate. An especially preferred coating composition according to the present invention comprises the vinyl dioxolane is HBVD and the polyisocyanate is a 1,6-hexamethylene diisocyanate based polyisocyanate having a viscosity at 23°C of from about 90 to about 250 mPa·s.

Preferred coating compositions according to the present invention are sprayable. Such coating compositions have a viscosity from about 10 to about 150 mPa·s, more preferably from about 20 to about 150 mPa·s.

Coating compositions according to the present invention may further comprise at least one reactive diluent to adjust the viscosity or other properties as desired. Such reactive diluents when used are present at from about 1 to about 50% by weight. Preferred reactive diluents include vinyl group containing compositions such as trimethyl propane triacrylate. Another preferred reactive diluent comprises at least one substituted vinyl dioxolane monomer having the formula: 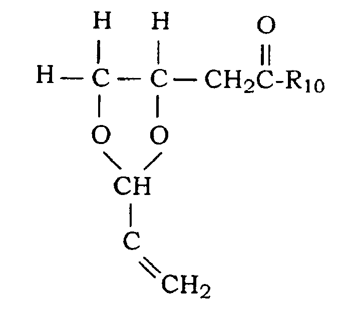 wherein R₁₀ is a mono-functional aliphatic based group having from 1 to about 10 carbon atoms. Preferred mono-functional aliphatic groups include urethanes, esters, and amides. The coating compositions of the present invention may also include as the reactive diluent HMVD or HBVD or a blend thereof.

Polymerization catalysts useful in forming the coatings of the present invention include cobalt octanoate, cobalt naphthenate, or a stannous composition.

The present invention also includes methods to reduce the viscosity of urethane-based polymeric coating compositions in the presence of no or essentially no volatile organic components, the methods comprising reacting a urethane prepolymer with at least one substituted vinyl dioxolane monomer to produce oligomers having a viscosity of from about 16 to about 150 mPa·s, and optionally comprising the further step of adding a reactive diluent.

The coating compositions of the present invention were applied both via hand-coating and spray-coating techniques to prepared aluminum surfaces as a catalyzed, no VOC, 100% reactive solids, low viscosity coating in a manner similar to typical, VOC containing, low viscosity aircraft coating compositions. However, unlike conventional VOC containing coating systems, the innovative coating compositions of the present invention released no volatile, toxic or flammable components to the environment during application or cure via air-drying at room temperature. This feature, combined with the excellent performance as a protective coating, will provide workers and the immediate atmosphere with a safe, pollution-free environment. These coatings are also low-cost, easily-applied, readily cured and high in performance.

### DETAILED DESCRIPTION OF THE INVENTION

The present invention provides polyurethane/vinyl dioxolane based coating compositions containing essentially no volatile organic components. The coating compositions of the present invention require no solvents or unreactive diluents for their application as spray-coatings and are therefore completely or essentially free of VOCs. In a particularly preferred embodiment of the present invention, the coating compositions are sprayable.

In preparing the coating compositions of the present invention, simple vinyl dioxolanes, fluid low in viscosity, are reacted with polyurethane based oligomers or prepolymers in the presence of an appropriate catalyst to form vinyl dioxolane end-capped polyurethane oligomers that have suitable properties, e.g., the appropriate viscosity, sheeting and surface-wetting capability, for use as coating compositions to form protective coatings. In preferred embodiments wherein the coating composition is sprayable, the appropriate viscosity is particularly important. Coatings in accordance with the present invention are formed in the presence of an appropriate catalyst to initiate polymerization from coating compositions comprising such vinyl dioxolane end-capped polyurethane oligomers. The catalyst can be added before or during application of the coating composition to the surface to be coated.

The term "polyurethane" as used herein also includes polymers which are not made up fully of polyurethane linkages. For example, ureas, allophonates, cyanurates and other linkages, may also be present in a vinyl dioxolane end-capped polyurethane oligomer of the present invention, depending upon ingredients used and reaction conditions. Additionally, isocyanates may be reacted with themselves to form polymeric forms of isocyanate linked together by isocyanurate and/or carboniimide bridges.

In accordance with the present invention, substituted vinyl dioxolane monomers and isocyanates or polyisocyanates are copolymerized with catalyst in a reaction medium comprising the vinyl dioxolanes and polyisocyanate to form vinyl dioxolane end-capped polyurethane oligomers. By polyisocyanate is meant an isocyanate having at least two -NCO groups per molecule.

The selection of the substituted vinyl dioxolane component(s), the isocyanate component(s) and the catalyst is important and criteria for doing so are discussed below.

The sprayable polyurethane/vinyl dioxolane based coating compositions of the present invention contain essentially no volatile organic components and comprise:
(a) at least one oligomer which consists of the reaction product of
   (i) 2-vinyl-4-hydroxy-1,3-dioxolane or at least one substituted vinyl dioxolane monomer having the formula: 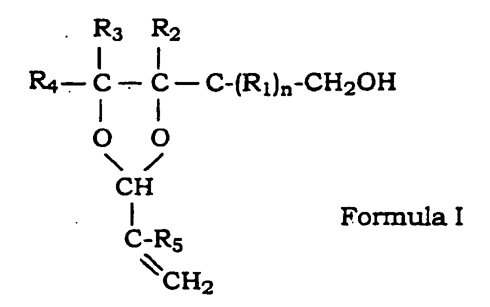 and,
   (ii) at least one aliphatic isocyanate or polyisocyanate, or having the formula

      R₆(NCO)ₙ Formula II

      at least one isocyanate-endcapped aliphatic prepolymer having the formula 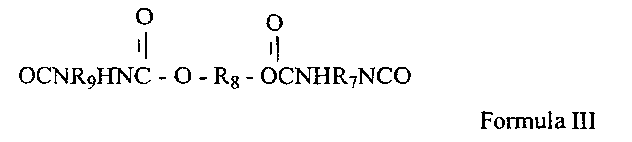 to form vinyl dioxolane-endcapped urethane oligomers; and
      (b) at least one catalyst to initiate polymerization of the oligomers to form a polyurethane/vinyl dioxolane polymeric coating.

In preferred coating compositions, the viscosity of the vinyl dioxolane end-capped polyurethane oligomers of the present invention is controlled to render them sprayable by selection of the appropriate combination of vinyl dioxolane monomer, aliphatic isocyanate, aliphatic polyisocyanate, or isocyanate end-capped aliphatic polyurethane prepolymer, or blends thereof, and catalyst. The viscosity may also be modified by adding reactive diluents to the reactive vinyl dioxolane end-capped polyurethane oligomers of the present invention. For example, monofunctional substituted dioxolanes having formula V, below, may be used in the diluting coating compositions of the present invention to an acceptable viscosity for spraying. Control of viscosity is further discussed below.

Vinyl dioxolanes suitable for use in the present invention are described for example, in U.S. Patent No. 3,010,923 (the '923 patent), which disclosed substituted vinyl dioxolane compounds for coating applications which contain a plurality of 2-vinyl-1,3-dioxolane groups. Although the '923 patent taught that the coating compositions disclosed therein can be applied in aqueous media, the '923 patent taught that spraying of the disclosed compositions is achieved by diluting with a volatile organic solvent such as toluene. See, e.g., column 15, lines 26-29 and lines 40-49. See also related U.S. Patent Nos. 3,010,918; 3,055,766; 3,058,933; and 3,245,927. See, also, U.S. Patent No. 3,849,445 which disclosed polycarbamates of organic polyisocyanates and cyclic acetals.

Preferred substituted vinyl dioxolane monomers for use in forming vinyl dioxolane end-capped urethane polyurethane oligomers for use in the coating compositions of the present invention have a rapid rate of reaction with the aliphatic isocyanate; are low in volatility and toxicity; and provide coatings having transparency and appropriate color which cure in air at room temperature in presence of a catalyst.

Preferred substituted vinyl dioxolane monomers for use in the present invention have the formula: 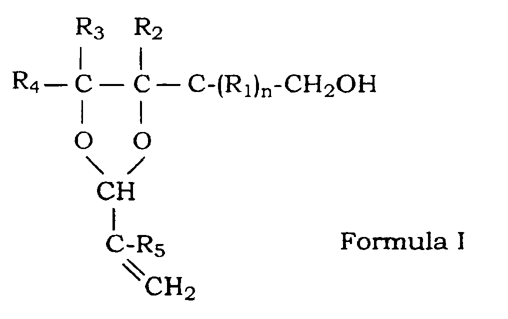 Wherein R₁, is an alkyl group preferably having from about 1 to 10, and more preferably no more than about 6, carbon atoms. R₂, R₃, R₄ and R₅ may be the same or different and each represents hydrogen or an alkyl group, having from about 1 to 10, and more preferably having from about 1 to 4, carbon atoms. Most preferably R₂, R₃, R₄ and R₅ are hydrogen.

Substituted vinyl dioxolane monomers for use in the present invention are readily made by known methods, e.g., by condensing an unsaturated aldehyde, such as acrolein, with an appropriate 1,2-diol or triol, such as glycerol, in the presence of an acidic catalyst, such as p-toluenesulfonic acid. Such substituted vinyl dioxolane monomers are autooxidizable, that is, on exposure to the air the monomer under goes a cross-linking reaction. The mechanism of cure is thought to and has been reported to involve a ring-opening reaction in the presence of air and catalyst, forming pendant hydroxyl groups (which contribute strong adhesive properties) and polymerizing the vinyl group into a highly cross-linked, hard coating. Accordingly, in forming substituted vinyl dioxolane end-capped polyurethane oligomers for use in the present invention, care must be taken to avoid the use of reactants which cause premature opening of ring. For example, the substituted vinyl dioxolane monomers should be stable to selected reaction catalysts for formation of the vinyl dioxolane end-capped polyurethane oligomers. Preferred vinyl dioxolane monomers are stable in the presence of dibutyltin dilaurate (hereinafter referred to as "tin") or 1,4-diazabicyclo(2.2.2)octane (DABCO) catalyst as determined by IR analysis.

2-vinyl-4-hydroxymethyl-1,3-dioxolane (HMVD) and 2-vinyl-4-hydroxybutyl-1,3-dioxolane (HBVD) as shown below are particularly preferred substituted vinyl dioxolanes for use in preparing the coating compositions of the present invention.

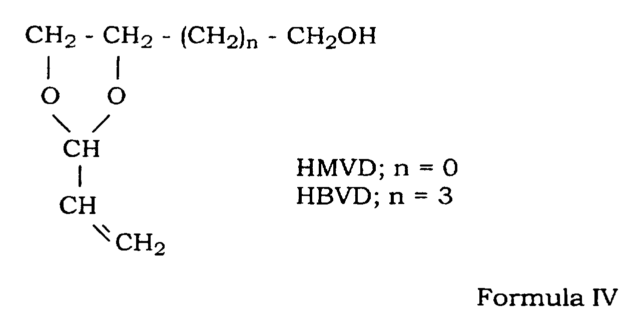

HMVD and HBVD are conveniently synthesized from two starting materials, namely, acrolein and glycerin in the case of HMVD, and 1,3-hexanetriol in the case of HBVD, using standard chemical equipment as illustrated below:

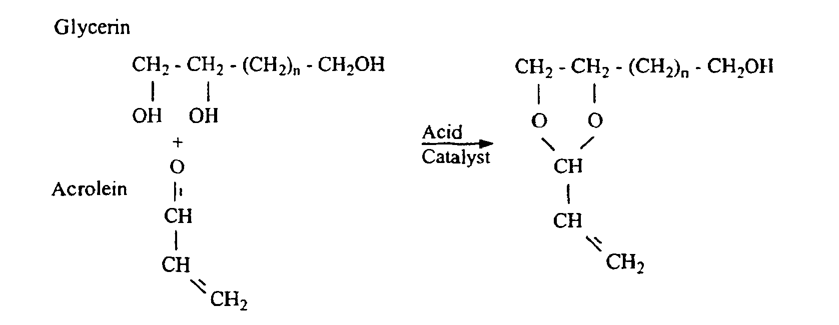

Particularly preferred coating compositions of the present invention can be applied by spray coating. In formulating such spray coatable compositions, the viscosity of vinyl dioxolane is taken into consideration, as well as the degree of cross-linking that the particular vinyl dioxolane is likely to provide. For example, coating compositions of the present invention prepared from HMVD tend to be higher in viscosity than similar formulations prepared using HBVD, even though HMVD is lower in viscosity than HBVD.

It is thought that the higher viscosity of HMVD based vinyl dioxolane end-capped polyurethane oligomers of the present invention results from increased cross-linking provided by the smaller HMVD molecule. However, the viscosity of such vinyl dioxolane end-capped polyurethane oligomers can be made suitable for spraying by, e.g., adding reactive diluents. The reactive diluent is preferably aliphatic, reacts with the components of the coating compositions, and provides no volatile organic components once reacted. Preferred reactive diluents have one or more mono-substituted, mono-functional vinyl dioxolane groups. Particularly preferred reactive diluent monomers include substituted vinyl dioxolanes having the following formula: 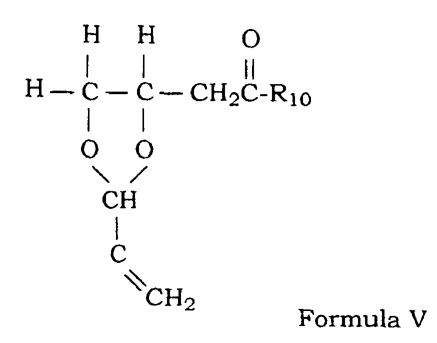 wherein R₁₀ is a mono-functional urethane, ester, amide or any other aliphatic based group having from about 1 to 10 carbon atoms. Vinyl dioxolane monomers as shown in Formula I above, including HMVD and HBVD, can also be used as reactive diluents. In such a case, an excess of the vinyl dioxolane monomer of Formula I over that required to react with free -NCO groups of the isocyanate or polyisocyanate is used.

Although preferred reactive diluents have the vinyl dioxolane group, other low viscosity vinyl containing monomers such as trimethyl propane triacrylate (TMPTA) can also be used as reactive diluents.

The coating compositions of the present invention comprising HBVD end-capped polyurethane oligomers exhibited desirable property and processing advantages, including very low viscosity, rapid reaction with diisocyanate comonomers and formation of tough, adherent, colorless coatings that cured in air at room temperature. For these reasons, HBVD is an especially preferred substituted vinyl dioxolane for use in the coating compositions of the present invention.

Some coatings prepared from coating compositions including HBVD end-capped polyurethane oligomers became hazy upon curing at room temperature. This effect was attributed to a crystallization phenomenon, which occurred prior to cross-linking and cure, causing the coating to crystallize and become hazy in appearance. The problem was solved by postcuring the hazy HBVD-based polyurethane/vinyl dioxolane coatings at 50°C for several hours. Immediately upon heating, the coatings lost their hazy appearance and clarified, possibly due to melting of polyurethane/vinyl dioxolane crystallites. It is anticipated that adding small amounts of comonomer to the HBVD end-capped polyurethane oligomers, e.g., HMVD monomer, to prevent crystallization of the coating composition prior to cure may avoid the problem. If successful, blending of HBVD vinyl dioxolane with traces of HMVD will facilitate the production of clear, colorless, HBVD-based polyurethane/vinyl dioxolane coatings.

Aliphatic isocyanates are preferred over aromatic isocyanates in preparing the reactive oligomers of the present invention even though aromatic isocyanate groups are considerably more reactive than the aliphatic isocyanate groups, resulting in coatings that dry faster and develop cure properties faster than comparable systems based on aliphatic isocyanates for a number of reasons. Urethane products made from aromatic diisocyanate monomers suffer the disadvantage that they degrade more easily than do those prepared from aliphatic diisocyanate monomers, especially when exposed to UV light. The higher resistance of products prepared from aliphatic diisocyanates to UV light-induced degradation means that coatings based on them have better yellowing and chalk resistance than those based on aromatic diisocyanates.

As used herein, the term "aliphatic" includes "cycloaliphatic." Preferred aliphatic isocyanates for use in forming vinyl dioxolane end-capped urethane polyurethane oligomers for use in the coating compositions of the present invention have a rapid rate of reaction with the substituted vinyl dioxolane monomer; are low in volatility and toxicity (e.g., no isocyanate vapors); provide coatings having transparency and appropriate color which cure at room temperature in presence of a catalyst; and, in particularly preferred embodiments, react to form spray-coatable vinyl dioxolane end-capped polyurethane oligomers.

Isocyanates having the formula

R₆(NCO)ₙ Formula II

wherein R₆ is aliphatic or cycloaliphatic and n is at least one, and isocyanate end-capped prepolymers having the formula 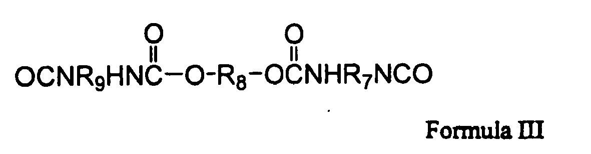 wherein R₇, R₈ and R₉ are each selected from an aliphatic or cycloaliphatic group having from about 6 to 10 carbons, are useful in preparing the coating compositions of the present invention.

Suitable aliphatic, including cycloaliphatic, isocyanates for use in preparing the reactive oligomers of the present invention include mono, di, tri, and other polyisocyanates. A preferred monomeric diisocyanate is bis(4-isocyanato-cyclohexyl)methane, commercially available from Bayer Corporation as DESMODUR W. Other preferred aliphatic diisocyanates include:
· hexamethylene diisocyanate
· 4,4-bis(cyclohexyl)methane diisocyanate
· isophorone diisocyanate
· 1-methylcyclohexame-2,4-diisocyanate
· 4,4',4"-tricyclohexylmethane triisocyanate

Preferred polyisocyanates for use in the sprayable coating compositions of this invention include polymeric isocyanates derived from various aliphatic diisocyanates, such as hexamethylene diisocyanate. 1,6-hexamethylene diisocyanate-based polyisocyanates are preferred. A particularly preferred 1,6-hexamethylene diisocyanate-based polyisocyanate has a viscosity of from about 90 to 250 mPa·s at 25°C and an NCO content of about 20 to 30%. These polyisocyanates are made by methods known to the skilled artisan. Such polyisocyanates are also commercially available from Bayer as DESMODUR N100, DESMODUR N3200 and DESMODUR N3400.

An aliphatic 1,6-hexamethylene diisocyanate based polyisocyanate having a viscosity @ 23°C of about 90-250 mPa·s, such as DESMODUR N3400, is an especially preferred polyisocyanate for preparing vinyl dioxolane end-capped polyurethane oligomers of the present invention because it exhibited the following advantageous properties:
· Rapid reaction with vinyl dioxolane monomer
· Extremely low volatility and toxicity (no isocyanate vapors)
· Produced low viscosity spray-coatable vinyl dioxolane end-capped polyurethane oligomer formulations
· Produced a transparent, colorless polyurethane/vinyl dioxolane based coating that cured at room temperature in the presence of catalyst.

Isocyanate-endcapped aliphatic urethane prepolymers are known to the skilled artisan and many are commercially available. Such prepolymers for use in forming the vinyl dioxolane end-capped polyurethane oligomers for use in the present invention include, for example, the prepolymer prepared from hexamethylene diisocyanate aliphatic polyester and polyether polyols, such as polycaprolactam and polyethylene adipate derived polyester polyols, and polytertramethylene polyether polyols.

It should be noted that in forming the coating compositions of the present invention mixtures of substituted vinyl dioxolane monomers may be used. Mixtures of aliphatic isocyanates and polyisocyanates, as well as mixtures of isocyanate-endcapped aliphatic urethane prepolymers, may also be used.

Illustrative of such combinations are mixtures of hexamethylene diisocyanate with polymeric isocyanates derived from hexamethylene diisocyanate and mixtures of hexamethylene diisocyanate with 4,4',4"-tricyclohexylmethane triisocyanate.

Preferred catalysts for formation of vinyl dioxolane end-capped polyurethane oligomers for use in the present invention are low in toxicity, strongly catalyze the oligomer synthesis reaction, are compatible with substituted vinyl dioxolanes at high temperatures, and cause no or minimal side reactions. Such preferred catalysts for forming vinyl dioxolane end-capped polyurethane oligomers for use in the present invention include 1,4-diazabicyclo(2.2.2)octane (DABCO) and dibutyltin dilaurate (hereinafter referred to as "tin" catalyst). DABCO is a particularly preferred catalyst because it showed the following desirable properties:
· Low-toxicity
· Strongly catalyzed the synthesis of vinyl dioxolane end-capped polyurethane oligomers
· Compatible with vinyl dioxolane component at high temperatures
· Caused no observed side reactions

Tin catalyst strongly catalyzed the synthesis of vinyl dioxolane end-capped polyurethane oligomers but under the conditions tested caused deleterious side reactions to occur upon heating of the reaction mixture. These led to foaming and eventual gelation of the reaction mixture. It is thought that tin also catalyzed a ring-opening reaction of the vinyl dioxolane monomer, leading to evolution of a gas, possibly acrolein, and cross-linking. For this reason, a tin catalyst is not a preferred catalyst under the conditions tested. However, tin catalysts of different formulations may be appropriate under some conditions.

The proportion of catalyst is usually within the range of 0.0005 %-3% by weight of metal (in the catalyst) based on the weight of coating composition materials.

If any volatile organic components are used in preparation of the reactive vinyl dioxolane end-capped polyurethane oligomers of the present invention, such volatile organic components are readily removed before spraying. However, one major advantage of our invention is that 100% of all reactants initially added to the reaction are consumed in producing the nonvolatile polyurethane/vinyl dioxolane coatings.

The reaction of the vinyl dioxolane and isocyanate or end-capped polyurethane prepolymer to form vinyl dioxomane end-capped polyurethane oligomers of the present invention can be followed by infrared spectroscopy (IR). The IRs give valuable information as to where the peaks of interest lay for each material and with this knowledge the subsequent appearance/disappearance of these peaks can be followed.

Determination of the reactivities of the substituted vinyl dioxolane monomers with aliphatic or cycloaliphatic isocyanates or polyisocyanates or isocyanate-endcapped aliphatic prepolymers were based on the appearance/disappearance and relative intensity changes of absorption peaks in the infrared spectra of the reaction solutions with time (Table 2 below). Infrared spectral analysis systems commercially available may be used. Samples of the substituted vinyl dioxolane monomers and aliphatic or cycloaliphatic isocyanate or polyisocyanate or isocyanate-endcapped aliphatic prepolymer were placed in a sealed IR cell and the cell could then be handled with no chemical hazard risk to the IR operator.

Comparisons were made between spectra obtained soon after component mixing and at various times during the reaction period. The main peaks of interest appear at 2273 and 1720 to 1690 cm⁻¹, assigned to the - N=C=O asymmetric stretch of the isocyanate group and -C=O stretch of a urethane structure, respectively. The disappearance of the peak at 2273 cm⁻¹ and appearance of a peak at 1720 to 1690 cm⁻¹ is indicative of the isocyanate group undergoing a reaction with the hydroxy group of the vinyl-1,3-dioxolane to form the desired urethane linkage. The relative intensity changes in these peaks can be used to measure the progress of the urethane formation reaction with time. The appearance of an absorption peak at 3330 cm⁻¹, due to the =N-H stretch of the urethane linkage, is also used to determine reaction success. The 1,3-dioxolane ring should remain intact throughout all the formations of vinyl dioxolane end-capped polyurethane oligomers of the present invention and can be monitored based on the absorption peaks at 990 and 942 cm⁻¹ remaining approximately constant in intensity with time.

Immediately prior to or during the coating process a catalyst is added to the vinyl dioxolane end-capped polyurethane oligomers of the present invention to initiate polymerization to form the desired coating. Preferred catalysts include cobalt naphthenate and cobalt octoate. If it is desired to apply the coating composition of the present invention by spray-coating, and the viscosity is too high, reactive diluents as described above can be added to achieve the desired viscosity for spraying. If it is desired to use the vinyl dioxolane monomer used in preparation of the vinyl dioxolane end-capped polyurethane oligomers as the reactive diluent, an excess of this reactant can be added at the time the vinyl dioxolane end-capped polyurethane oligomers are prepared.

Vinyl dioxolane end-capped polyurethane oligomers of the present invention were prepared using the following aliphatic isocyanate and polyisocyanates:
· aliphatic 1,6-hexamethylene diisocyanate based polyisocyanate having a viscosity of about 90 to 250 mPa·s at 23°C, e.g., DESMODUR N3400.
· aliphatic 1,6-hexamethylene diisocyanate based polyisocyanate having a viscosity of about 1300 to 2200 mPa·s at 25°C, e.g., DESMODUR N3200
· aliphatic 1,6-hexamethylene diisocyanate based polyisocyanate having a viscosity of about 5000 to 10,000 mPa·s at 25°C, e.g., DESMODUR W
· aliphatic polyisocyanate bis(4-isocyanato-cyclohexyl)methane, a monomeric isocyanate having a viscosity of about 20 to 40 mPa·s at 25°C, e.g., DESMODUR N100

These vinyl dioxolane end-capped polyurethane oligomers were evaluated with respect to their effect upon processing and/or properties of the coatings formed in accordance with the present invention.

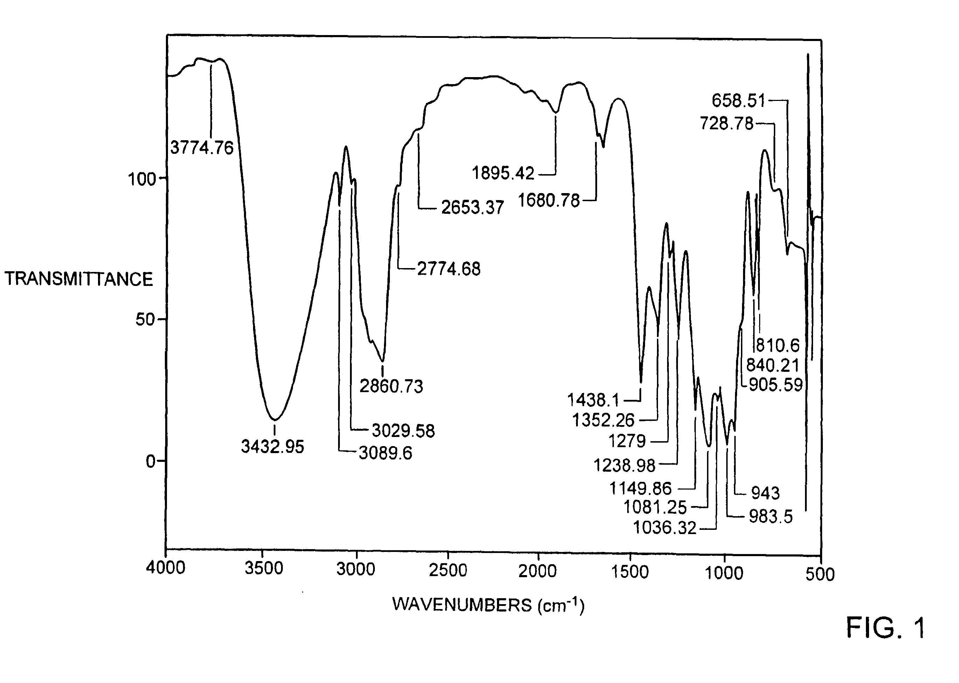

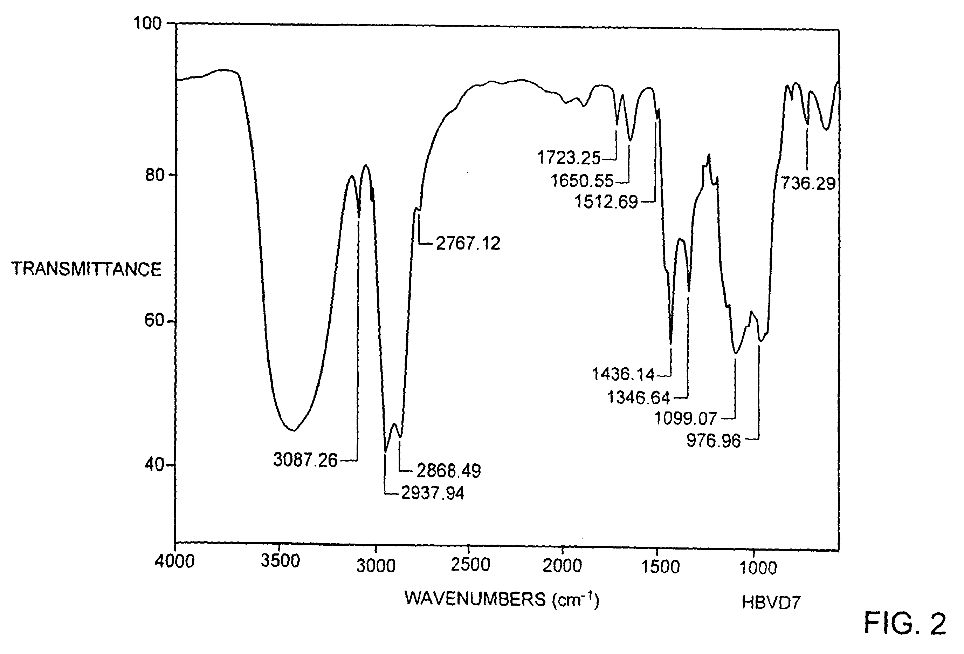

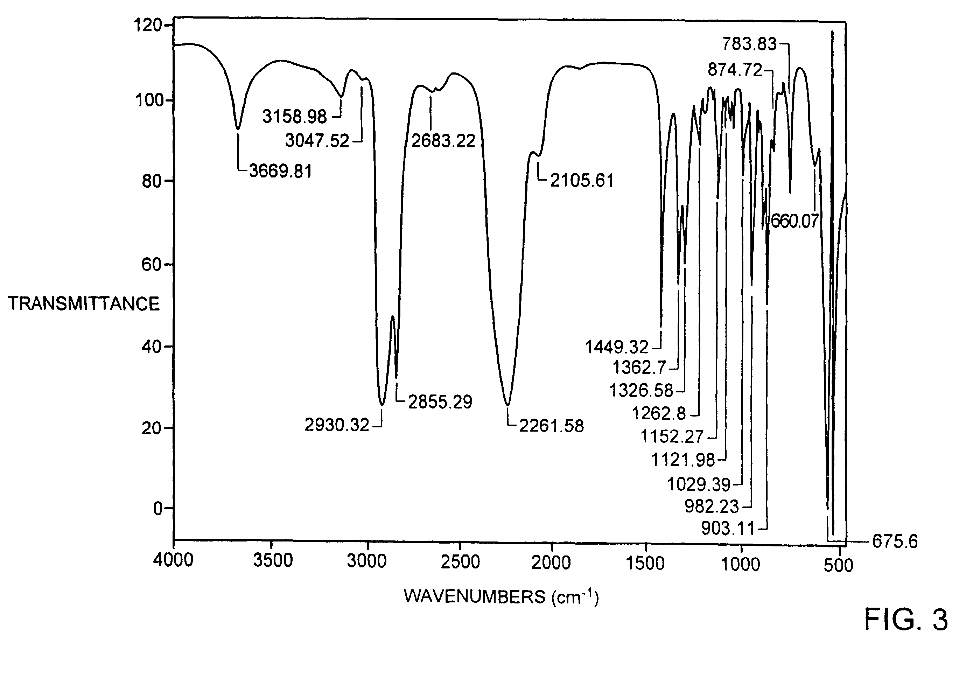

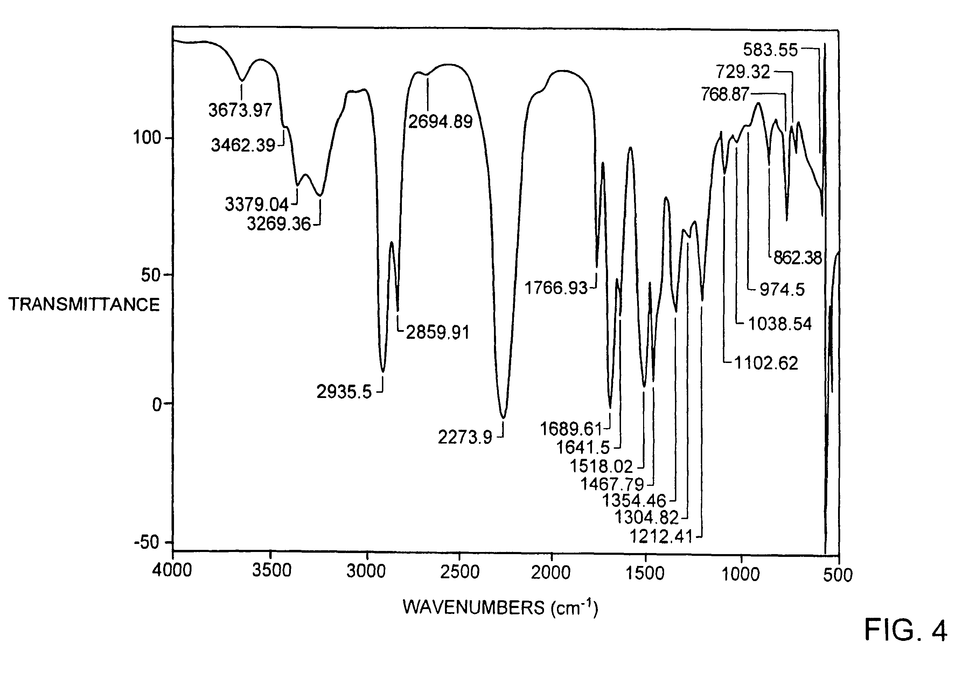

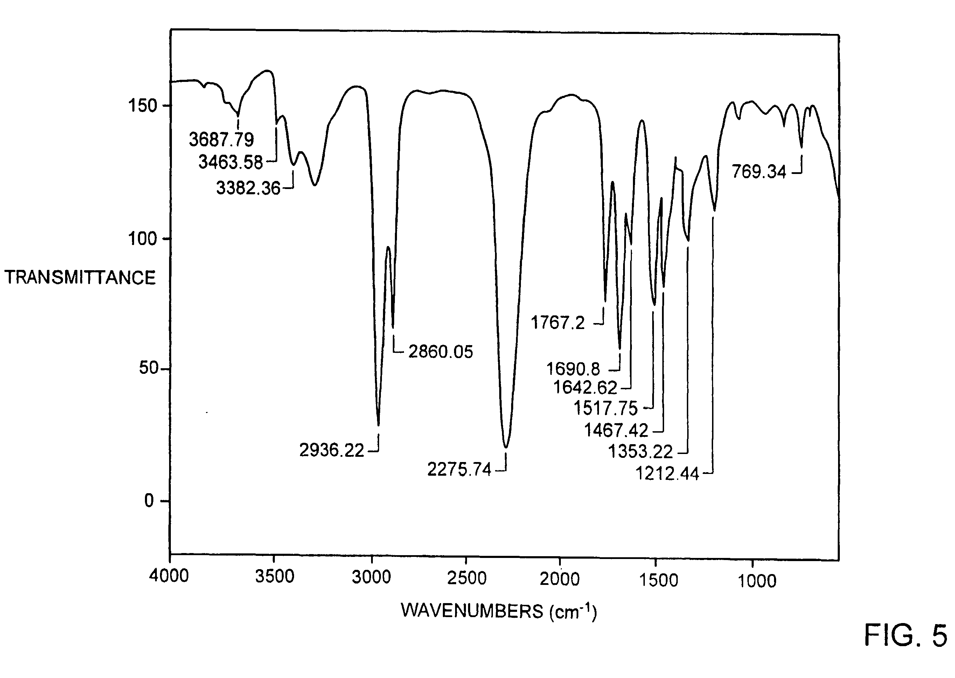

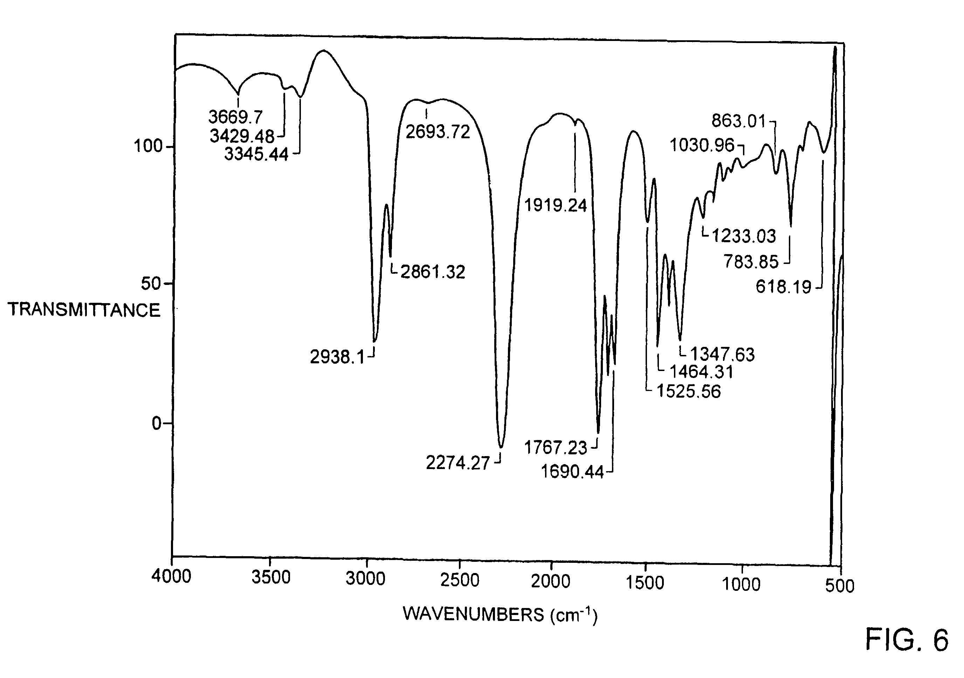

The infrared spectra for HMVD, HBVD, DESMODUR W, DESMODUR N100, DESMODUR N3200 and DESMODUR N3400 are illustrated in Figures 1 through 6 respectively. The vinyl dioxolane peaks of interest can be seen at 3430 cm⁻¹ (-O=H) and at 990 and 942 cm⁻¹ (-C-O-C stretch), while the DESMODUR materials have their main peak of interest at about 2270 cm⁻¹ (-N = C = O stretch).

The best conditions for synthesis of vinyl dioxolane end-capped polyurethane oligomers from vinyl dioxolane and aliphatic diisocyanate monomers in the presence of catalyst involved heating the reaction mixture to 80°C for several hours. This minimized increases in viscosity that would gradually occur in synthesis reactions conducted over extended periods of time at elevated temperature due to self-polymerization of diisocyanate.

One preferred coating composition of the present invention comprises the vinyl dioxolane end-capped polyurethane oligomers comprising the reaction product of HBVD/DESMODUR N3400 and the catalyst DABCO (0.1 % based on weight). See, Examples 4 and 7 below. The polyurethane/vinyl dioxolane coating obtained by spray coating an aluminum substrate with this coating composition at 50°C was colorless and transparent. This polyurethane/vinyl dioxolane based coating cured within 24 hours at room temperature, followed by a post cure at 50°C, into a hard, tenacious coating that was resistant to water.

Another preferred aliphatic 1,6-hexamethylene diisocyanate based polyisocyanate, DESMODUR N3200, produced some of the highest gloss, highest transparency and highest hardness polyurethane/vinyl dioxolane based coatings. See, Examples 3 and 6 below.

If it is desired to spray a coating composition in accordance with the present invention and it is determined that the viscosity of the vinyl dioxolane end-capped polyurethane oligomer is too high for spraying, then reactive diluents as described above can be added. The diluent can be added at from about 1 to 50 % by weight, more preferably 1 to 30 % by weight and most preferably less than 15 % by weight. In other words, the minimum amount to achieve target viscosity while maintaining desired coating properties is added.

It should be noted that reactive diluents can also be used to lower the cost, if the diluents are less expensive than the base coating composition.

The coating compositions prepared from HMVD/DESMODUR N3200/DABCO (0.1%) and HBVD/DESMODUR N3200/DABCO (0.1%) under the conditions used were much higher in viscosity than those prepared from DESMODUR N3400 and were not spray-coatable. It is anticipated that the properties of this coating composition and the coatings formed therefrom can be tailored, for example, by blending at least one reactive diluent as described above, prior to or after the reaction, between the isocyanate or polyurethane prepolymer component and the vinyl dioxolane monomer or by blending different vinyl dioxolane end-capped polyurethane oligomers of the present invention after their synthesis.

HMVD was reacted with DESMODUR W, hydrogenated bis(4-isocyanatocyclohexyl)methane (HMDI) in the presence of different catalysts as described in Example 1 below. Relative reactivities were determined by monitoring the progress of the reaction using infrared spectroscopy, mainly the disappearance of the isocyanate peak at 2270 cm⁻¹ and appearance of the urethane peak at 1720 to 1690 cm⁻¹. Tin catalyst appeared to catalyze the reaction better than DABCO at ambient temperature. Comparable infrared absorption peak intensity changes to those observed with the tine catalyst system were found after heating the DABCO catalyzed reaction to 50°C for 5 hours. The 1,3-dioxolane ring remained intact throughout all the reactions based on the absorption peaks at 990 and 942 cm⁻¹ remaining approximately constant in intensity with time. However, in all cases, under the conditions used the reaction mixture gelled and set up, while significant amounts of unreacted isocyanate groups remained.

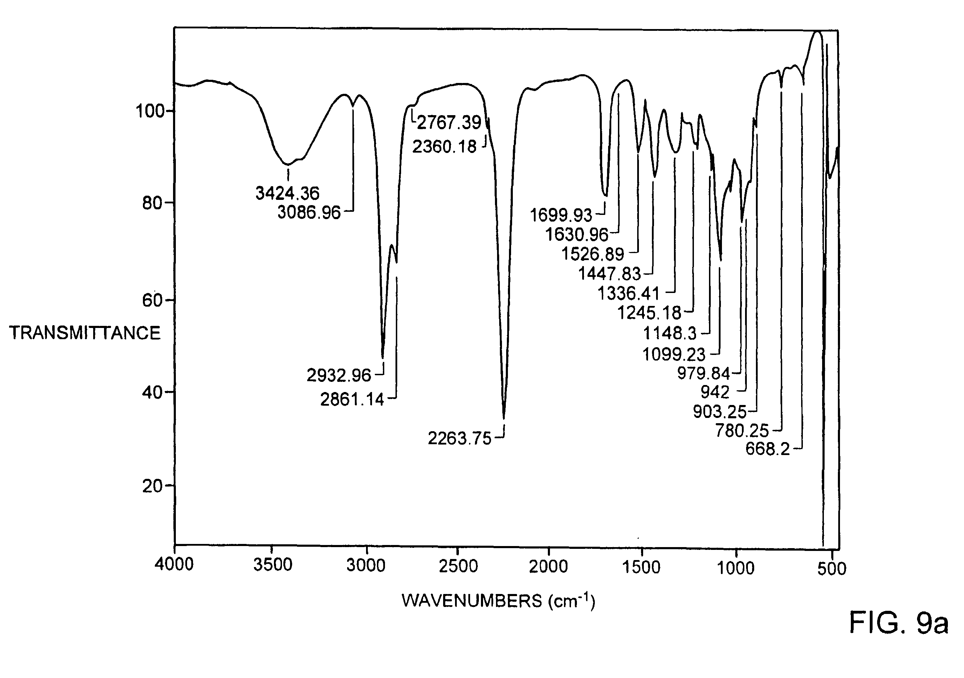

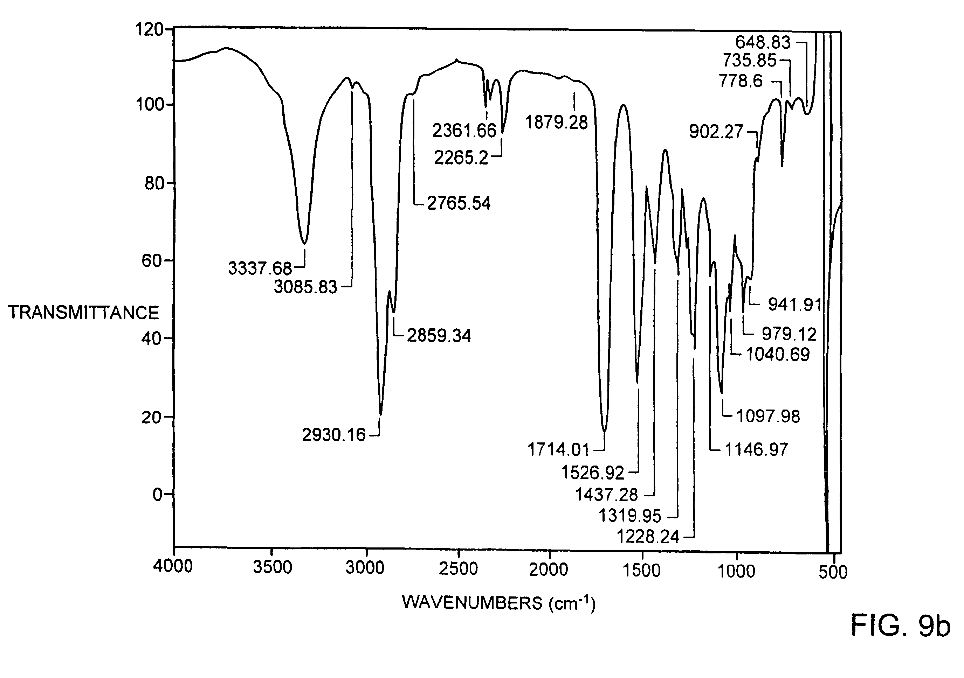

The reaction of HBVD with DESMODUR W was investigated as reported in Example 5 below. This reaction was carried out in the presence of tin catalyst (experiment 7a) and DABCO catalyst (experiment 7b, 7c). According to IR results, using 0.1 % DABCO catalyst at 80°C (experiment 7c), this reaction went to completion with the -N=C=O stretch disappearing, the = N-H and -C=O peaks appearing and the -C-O-C stretch of the 1,3-dioxolane ring remaining constant. Upon going to completion, this reaction mixture had a paste-like viscosity. Figure 9a and 9b shows the IR spectra at the beginning and end of experiment 7c which was the most successful reaction for this formulation.

DESMODUR W is extremely low in viscosity, and thus, is thought to be a useful material to control viscosity of the resultant vinyl dioxolane end-capped polyurethane oligomers of the present invention. DESMODUR W may also be blended with other isocyanates to increase adhesiveness. However, this aliphatic isocyanate is volatile, toxic and highly irritating and synthesis of vinyl dioxolane end-capped polyurethane oligomers of the present invention must be carried out under appropriate protective conditions. Once reacted, DESMODUR W loses these undesirable properties. DESMODUR W was found to be less reactive toward either HMVD or HBVD, even in the presence of high concentrations of catalyst at elevated temperatures than other diisocyanates tested. A different catalyst may increase the reaction rate.

The reaction of HMVD with DESMODUR N100 was investigated as described in Example 2 below. Using IR analysis, the reaction was seen to proceed in the right direction, with the appropriate IR peaks appearing and disappearing. DESMODUR N100 was determined to be unsuitable under the conditions used when reacted with HMVD due to low reactivity, off coloration of the reaction mixture and high viscosity.

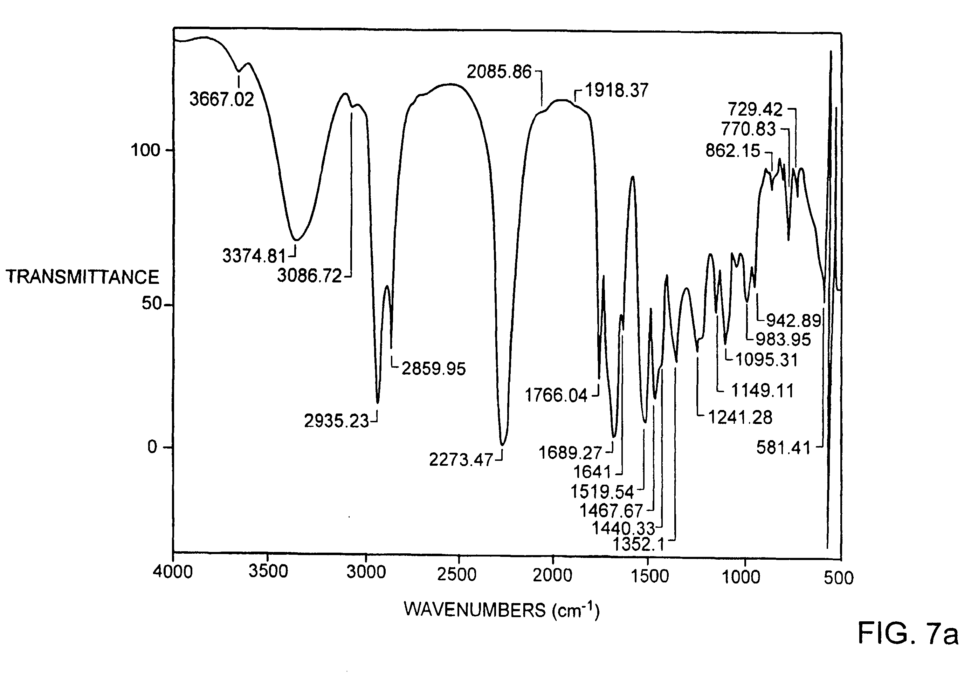

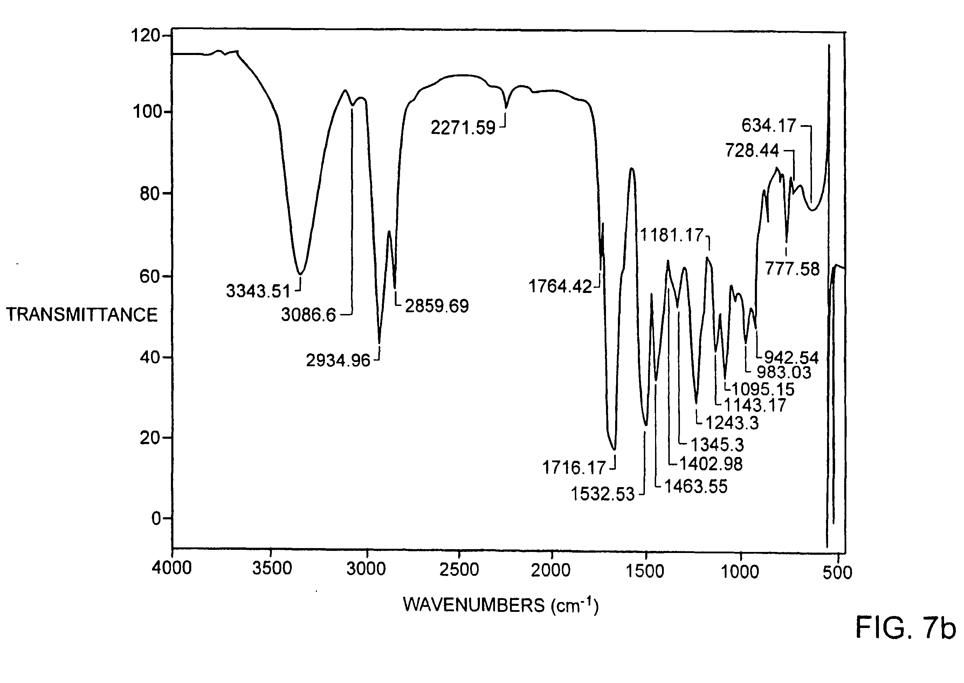

The reaction of HMVD with DESMODUR N3200 was investigated as described in Example 3 below. This reaction was investigated in the presence of no catalyst (experiment 5a), and DABCO catalyst (experiment 5b and c). According to IR results, using 0.1 % DABCO catalyst at 70°C (experiment 5c), this reaction went to completion with the -N=C=O stretch disappearing, the =N-H and -C=O peaks appearing and the -C-O-C stretch of the 1,3-dioxolane ring remaining constant. Under the conditions used the reaction mixture became progressively more viscous as the reaction proceeded and was paste-like at reaction completion rendering them unsuitable for spraying. However, this vinyl dioxolane end-capped polyurethane oligomers produced some excellent polyurethane/vinyl dioxolane coatings as described in Example 8, below. Figure 7a and 7b shows the IR spectra at the beginning and end of the reaction for experiment 5c which was the most successful reaction for this formulation.

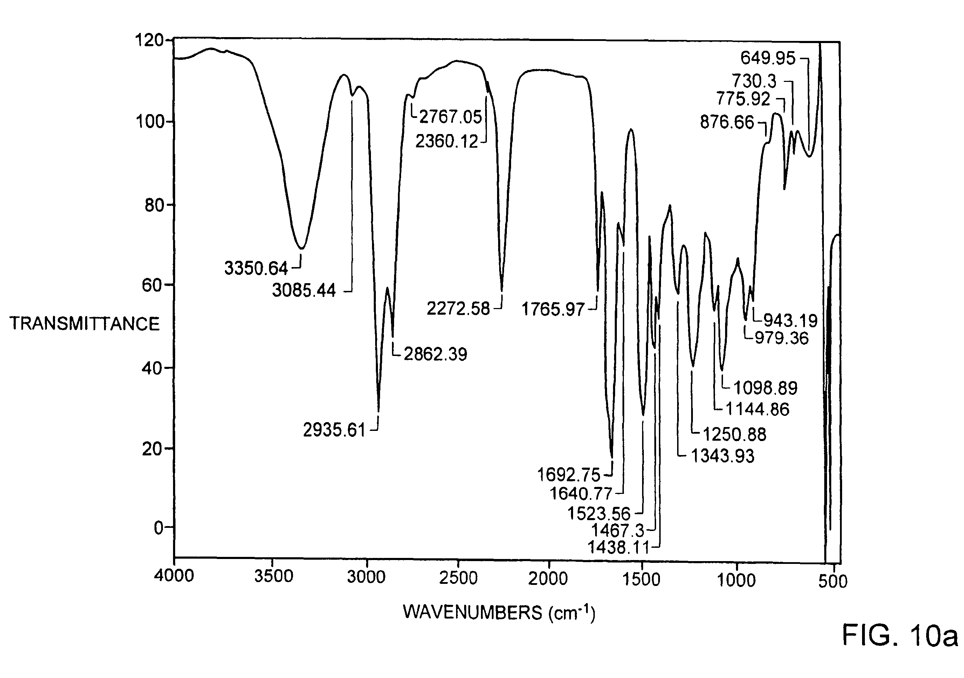

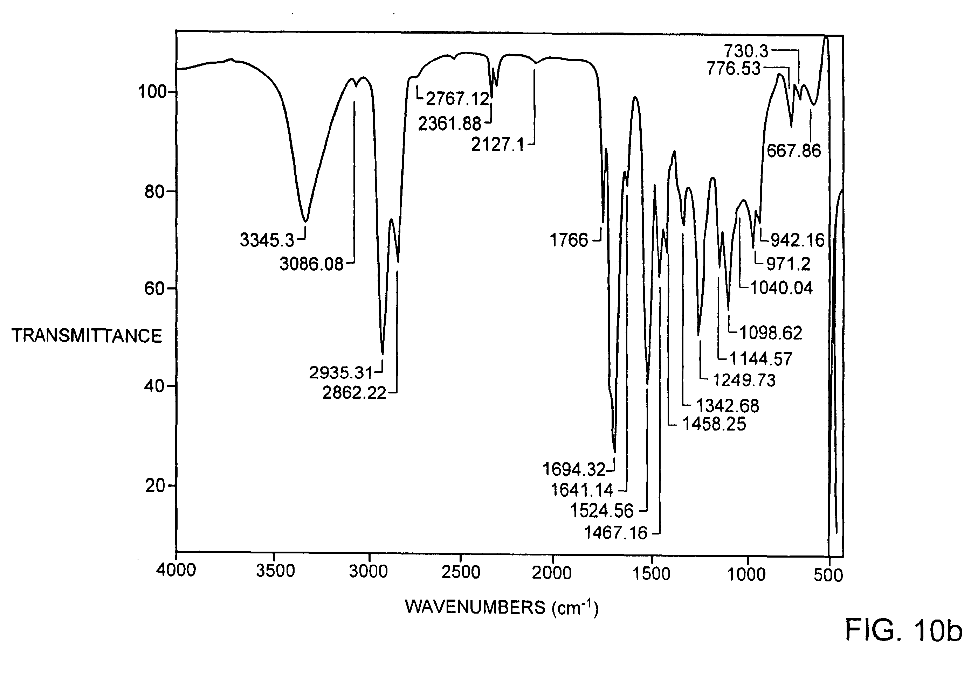

The reaction of HBVD with DESMODUR N3200 was investigated as described in Example 6 below. This reaction was investigated in the presence of DABCO catalyst only (experiment 8a through c), this reaction went to completion with the -N=C=O stretch disappearing, the =N-H and-C=O peaks appearing and the -C-O-C stretch of the 1,3-dioxolane ring remaining constant. Upon going to completion, this reaction mixture had a viscosity of tar. This formulation produced some excellent coating samples AS described in Example 8 below. Figure 10a and 10b shows the IR spectra at the beginning and end of this reaction which was the most successful reaction for this formulation.

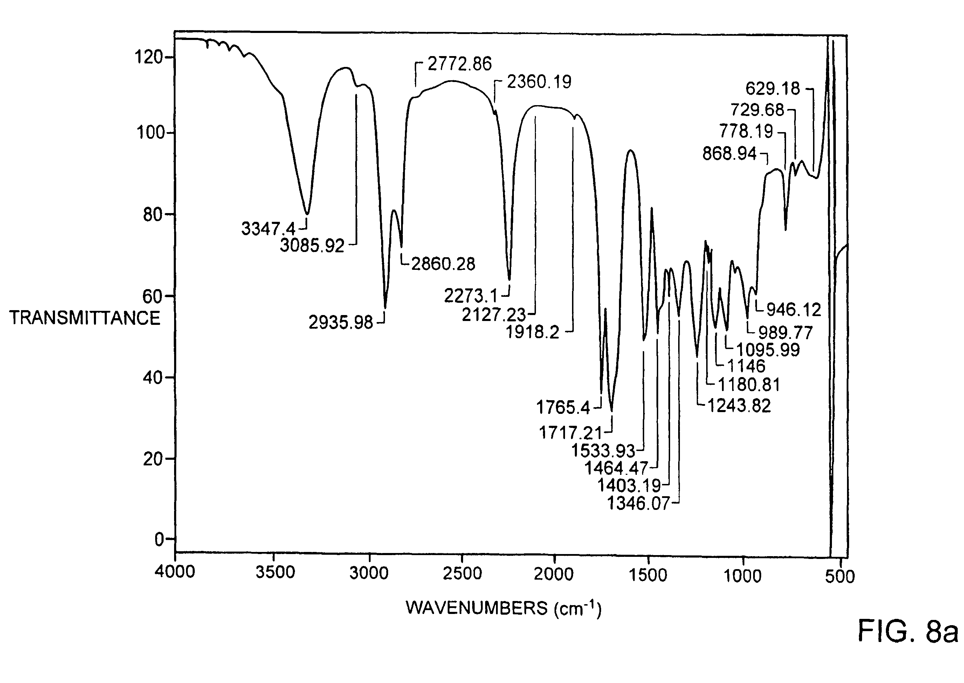

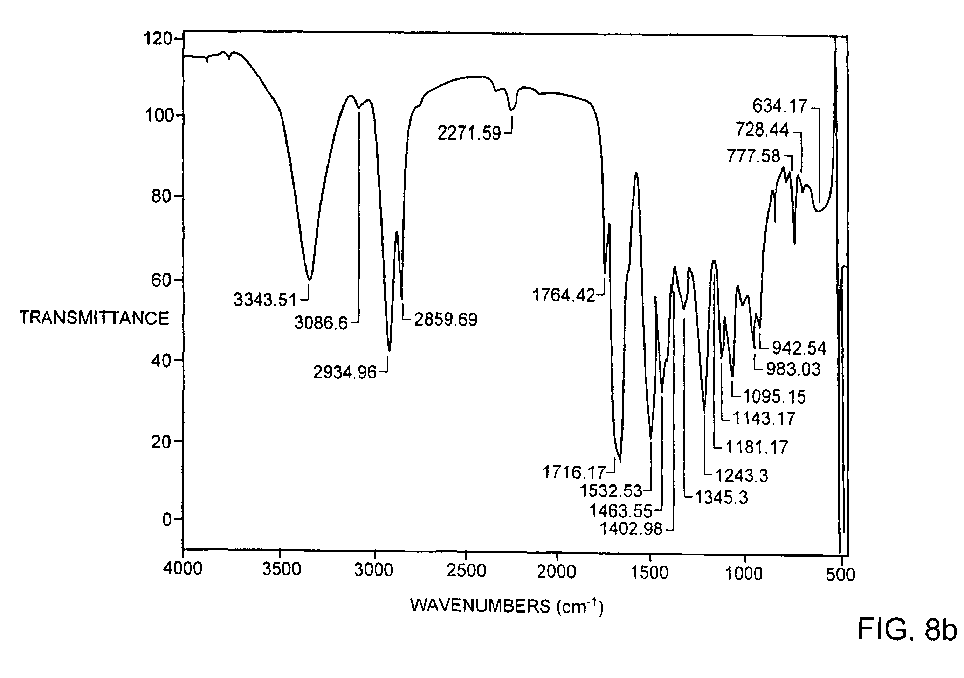

The reaction of HMVD with DESMODUR N3400 was investigated as described in Example 4 below. This reaction was investigated in the presence of DABCO catalyst (experiment 6a, 6b). According to IR results, using 0.1 % DABCO catalyst at 70°C (experiment 6b), this reaction went to completion with the -N=C=O stretch disappearing, the =N-H and -C=O peaks appearing and the -C-O-C stretch of the 1,3-dioxolane ring remaining constant. Upon going to completion, this reaction mixture had a viscosity of less than honey. This formulation produced some excellent coating samples which are described in Example 8. Figure 8a and 8b shows the IR spectra at the beginning and end of this reaction which was the most successful reaction for this formulation.

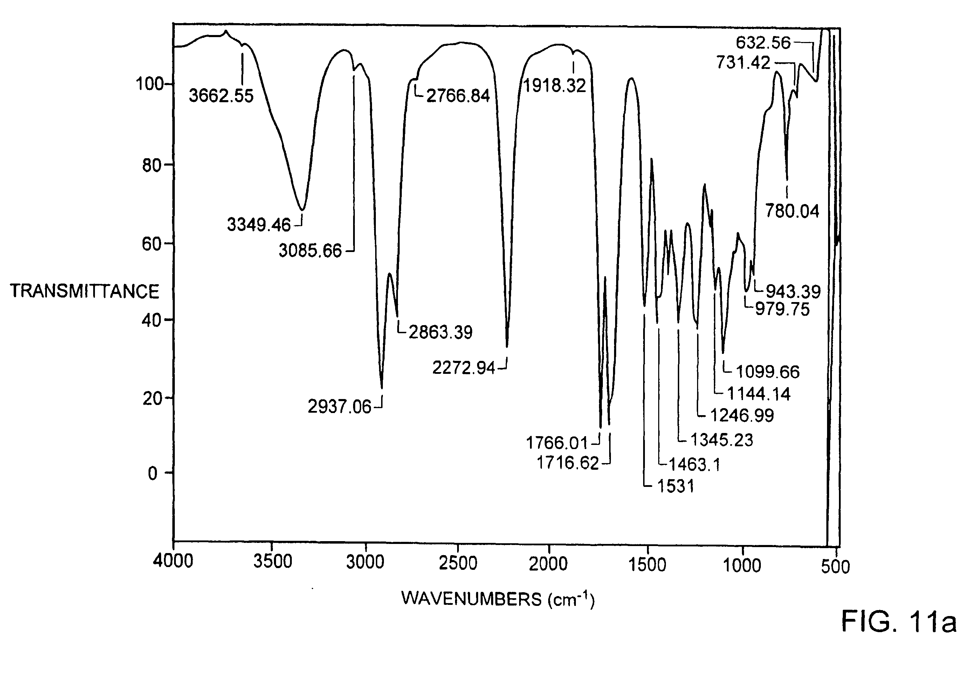

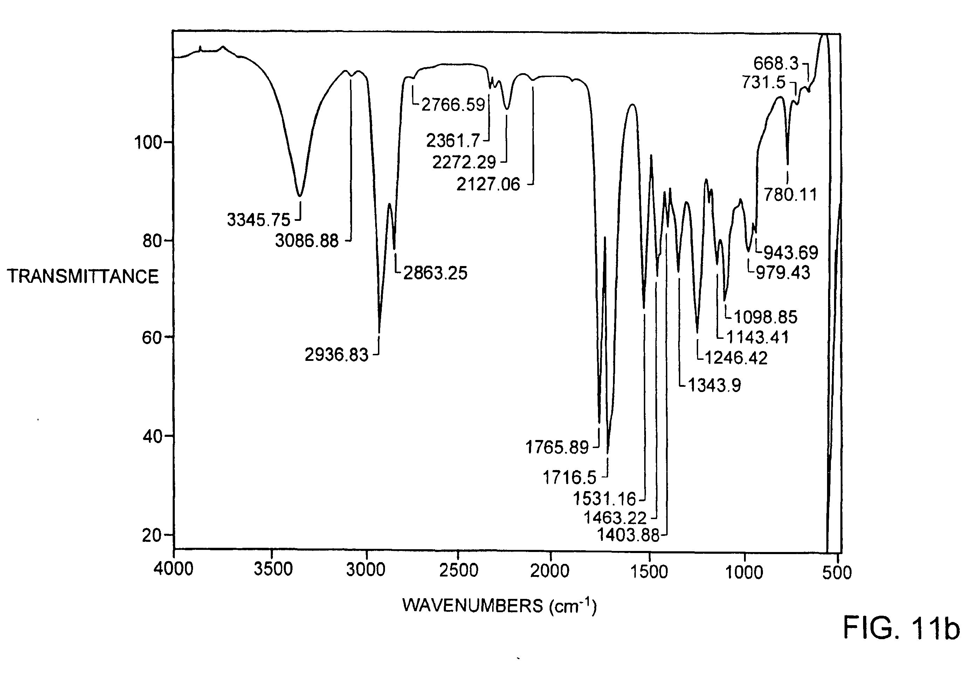

The reaction of HMVD with DESMODUR N3400 was investigated as described in Example 7 below. This reaction was investigated in the presence of DABCO catalyst only (experiment 9a, 9b). According to IR results, using 0.1 % DABCO catalyst at 80°C (experiment 9a), this reaction went to completion with the -N=C=O stretch disappearing, the =N-H and - C=O peaks appearing and the -C-O-C stretch of the 1,3-dioxolane ring remaining constant. Upon going to completion, this reaction mixture comprising vinyl dioxolane end-capped polyurethane oligomers of the present invention had a viscosity of less than syrup and was spray coatable. This formulation produced some excellent coating samples and these are described in Example 8 below. Figure 11a and 11b shows the IR spectra at the beginning and end of this reaction which was the most successful reaction for this formulation.

It was found that most of the vinyl dioxolane end-capped polyurethane oligomers prepared in accordance with the present invention were completely reacted, as indicated by the infrared results. This is an important consideration in selecting reactants for the coating compositions of the present invention.

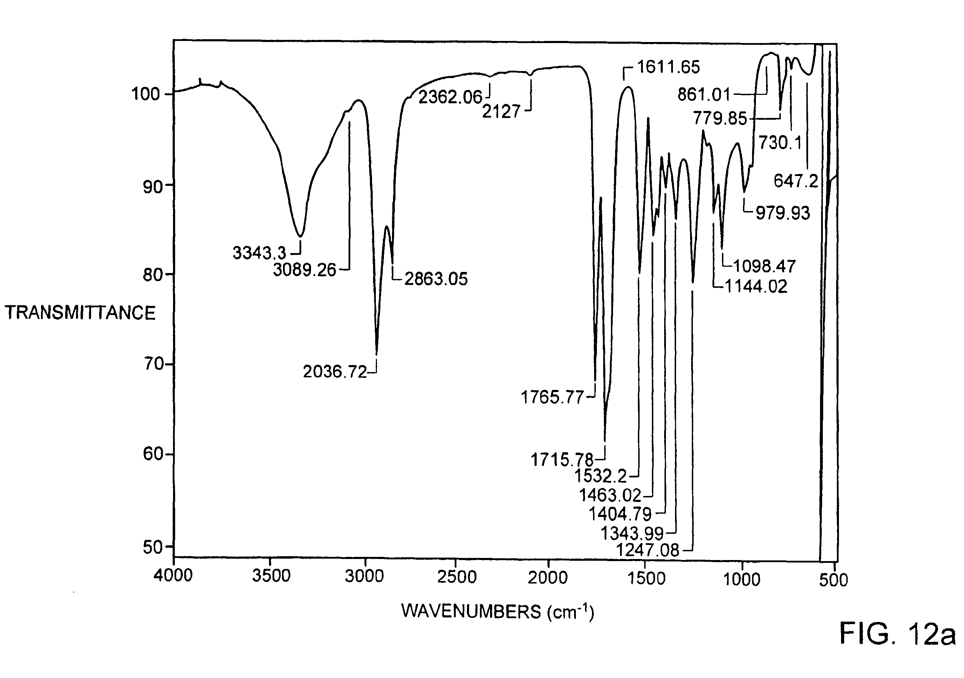

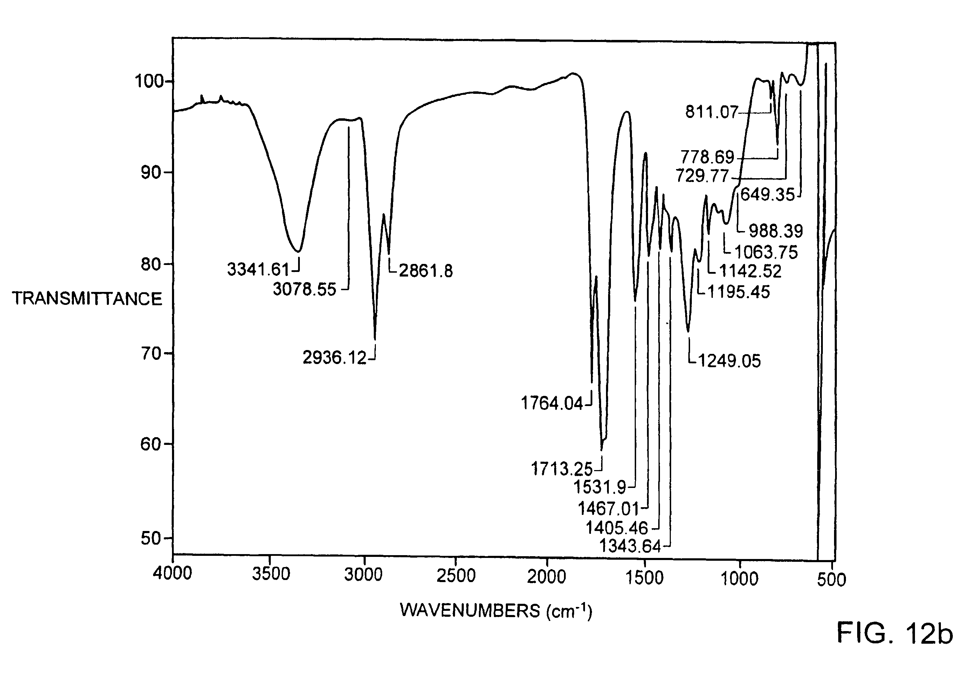

Another very important property is the ability of the coating composition to cure to form a tough, durable and adherent polyurethane/vinyl dioxolane based coating. Vinyl dioxolane cure studies revealed that cobalt octoate was the best catalyst for curing the polyurethane/vinyl dioxolane based coatings of the present invention under the conditions used. As an example, Figure 12a and 12b illustrates the cure mechanism of the HBVD/DESMODUR N3400 coating composition in the presence of 0.5% cobalt octoate. Figure 12a shows the IR spectra immediately after mixing in the cobalt catalyst, with the -C-O-C- stretch of the dioxolane ring remaining intact. Figure 12b shows an IR of the same sample having been heated at 50°C for 12 hours. The -C-O-C- stretch has disappeared, indicating that the vinyl dioxolane ring opened as the polyurethane/vinyl dioxolane based coating of the present invention cured.

A summary of hand coating trials carried out on coating compositions comprising vinyl dioxolane end-capped polyurethane oligomers of the present invention and cobalt octoate catalyst is given in Example 8. The coating compositions were applied to 6 in. x 3 in. panels of both bare and chromated aluminum. Scotch Tape was used as a shim to set the coating thickness and the coating compositions were spread onto the panel using a glass slide as a doctor blade.

Early coating samples were found to have a number of defects including dewetting spots and wrinkles but these were found attributable to contaminants such as residual cleaning solvent and stopcock grease from the reaction vessel. These problems were remedied by using vinyl dioxolane to lube all reaction vessel joints and by baking the aluminum panels at 100°C after solvent cleaning.

DESMODUR N3400 is a preferred polyisocyanate for preparing the coating compositions of the present invention. HBVD reacted well with DESMODUR N3400 in the presence of 0.1 % DABCO (see Example 7) to form relatively low viscosity coating composition comprising vinyl dioxolane end-capped polyurethane oligomers that spread easily onto the aluminum test panels and cured in the presence of 0.5% cobalt octoate (24 hours room temperature, 24 hours at 50°C) into a tough, hard coating. See Example 8 below for description of cured coating. HMVD also reacted very well with DESMODUR N3400 to form a reasonably low viscosity coating composition comprising vinyl dioxolane end-capped polyurethane oligomers, though not as low as the vinyl dioxolane end-capped polyurethane oligomers formed from the HBVD/DESMODUR N3400 reaction mixture. The HMVD/coating composition cured (about 24 hours room temperature, about 24 hours at about 50°C) into a tough, hard coating.

A coating composition comprising vinyl dioxolane end-capped polyurethane oligomers formed by reacting HBVD/DESMODUR N3400 as described in Example 7 and 0.1 % cobalt octoate catalyst was applied as a spray coating. It was found that the coating quality was improved by diluting the vinyl dioxolane end-capped polyurethane oligomers with vinyl dioxolane monomers. Example 9 describes the results and observations taken during spray-testing of this polyurethane/vinyl dioxolane based coating composition. Testing included spraying the vinyl dioxolane end-capped polyurethane oligomers and catalyst mixture alone, as well as spraying a 1:1 dilution of the vinyl dioxolane end-capped polyurethane oligomers and catalyst. Successful spraying was achieved in both cases, but the diluted polyurethane/vinyl dioxolane coating composition gave the better results.

Aluminum test panels coated with coating compositions of the present invention are described in Example 10. These test panels were subjected to cross-hatch adhesion testing in accordance with ASTM D3359-95 (see Example 11 below). All of the samples tested passed.

Each of the coated panels of Example 10 were subjected to a pencil hardness testing in accordance with ASTM D3362-92a, the results of which are described in Example 12 below. The results show that the HBVD-based coating samples are a much harder coating than the HMVD-based coatings, with an average 5B pencil hardness which is at the higher end of the hardness scale.

Selected panels described in Example 10 were also subjected to fluid resistance testing. Fluids selected included water, MEK, cleaning solution (Forest-Kleen, Atlantic Cleaning Products) and hydraulic fluid. The resistance of the coatings of the present invention to these respective fluids is described in Example 13, Tables 13-1 through 13-4, below.

MEK and cleaning solution visibly appeared to degrade the coatings while water and hydraulic fluid did not, indicating that further refinement can be made to increase cross-link density of the coating, e.g., tri-functional vinyl dioxolanes can be used to prepare the end-capped polyurethane oligomers for use in the present invention. Furthermore, a 1,6-hexamethylene monomeric diisocyanate such as DESMODUR W which is a smaller molecule resulting in more cross-linkable polyurethane groups could be used to increase adhesion to the surface. During residual pencil hardness testing, the coating would often delaminate from the substrate without actually failing the hardness test. The substrates used had not been primed and were simply bare or chromated aluminum substrates. It is believed that failure/delamination occurred due to onset of corrosion at the metal/coating interface. Chromated aluminum substrates performed much better during all immersion tests confirming this hypothesis. The results can be summarized as follows:
· Water did not visibly appear to have a significant effect on any of the films.
· MEK does degrade the films somewhat with the coatings appearing tacky when removed from solution.
· The general purpose cleaning solution (containing ammonia-high pH) used appeared to have the most severe effect on all of the coatings tested. It appeared to be causing initiation of corrosion at the coating/metal interface. Chromate conversion-coated panels showed superior resistance to cleaning solution during these tests.
· Hydraulic fluid did not visibly appear to have a significant effect on any of the coatings tested.
· HMVD-based coatings, while delaminating and degrading in some cases, actually appeared to harden after immersion in water as if some catalytic reaction was taking place.
· HBVD-based coatings became softer following immersion in water.
Overall the coatings show good fluid resistance, even in the case of an aggressive solvent such as MEK. More delamination of films was seen in the case of bare, untreated aluminum panels, indicating that the apparent delamination/degradation of the films was due to corrosion of the substrate and not due to the coating itself. Coating compositions containing vinyl dioxolane end-capped polyurethane oligomers of the present invention when coated onto chromate conversion-treated aluminum panels showed much higher resistance to delamination during immersion tests. Accordingly, it is recommended that a conversion-coated substrate be used.

The evaluation of sample coated panels described in Example 14 below was performed by an outside corporation on two panels coated with a coating composition of the present invention comprising vinyl dioxolane end-capped polyurethane oligomers formed by the reaction of HBVD and DESMODUR N3400 in the presence of 0.1% DABCO catalyst and 0.5% cobalt octoate catalyst to catalyze polymerization of the oligomers. The results for both panels were very similar. The coatings were found to have excellent MEK resistance (25 double MEK rubs), excellent impact elongation (60%) and appeared to have very good water and hydraulic-fluid resistance. During hardness testing of the panels following water immersion (panel No. 7) and hydraulic-fluid immersion (panel No. 8), the coating delaminated from the substrate during the pencil hardness test due to poor adhesion. However, while there was some softening, the films were still tough and relatively hard after these immersion tests. The delamination of the coating is not considered to be a problem as an actual coating would be applied over a primed substrate, ensuring far greater adhesion.

Additional tests were conducted by the Navy on test specimens hand-coated with a coating formulation of the present invention. The results of these tests are shown in Example 15 below. These tests were carried out according to military specifications.

The dioxolane-based coatings are expected to be UV, corrosion and weather-resistant because of their acrylate configuration after cure.

The coating compositions of the present invention can be used as clear, unpigmented coating compositions, or they can be pigmented, using proportions well known in the art, with pigments commonly used in the coating industry, such as metal oxides, sulfides, sulfates, silicates, chromates, iron blues, organic colors, and metal flake pigments. Since some pigments retard drying, it is preferable to avoid them since the coating compositions of the present invention are air-drying materials. However, the retarding effects can be minimized as known in the art by force-drying or incorporating suitable additives.

The coating compositions can be blended with other well known film-formers such as vegetable oils, oil-modified alkyd resins, oleoresinous varnishes, alkylated urea aldehyde resins, alkylated melamine aldehyde resins, polyepoxy-polyhydroxy resins, phenol aldehyde resins, cellulose acetate, cellulose acetate butyrate, polymers, and copolymers of vinyl and vinylidene compounds such as vinyl chloride, vinylidene chloride, vinyl acetate, acrylic and methacrylic acid and the esters thereof, styrene, butadiene, and the like; elastomers such as neoprene, styrene-butadiene rubbers, acrylonitrile-butadiene rubbers and isobutylene-isoprene rubbers; polyurethanes, and silicones.

Other common ingredients of organic film-forming compositions can be used in the manner and in proportions well known in the art. These include plasticizers, catalysts, hardeners, anti-skinning agents and surface active agents.

The clear unpigmented compositions of this invention can be made by simply mixing the ingredients as taught in the present specification. When pigmentation is involved, a conventional pigment grinding or dispersing step is required. The coating compositions of this invention are useful for protecting and/or decorating articles made of such materials as wood, metal, ceramic, leather and fabric. The coatings of the present invention are applied by spraying followed by normal air-drying via simple exposure to air at ordinary room or atmospheric temperature or by force-drying at a convenient temperature above ambient temperature but below a temperature which decomposition or some other objectionable results occur or a combination of both.

The coating compositions of the present invention are applied by spraying, including airless and electrostatic spraying.

The coating compositions and coatings of the present invention will be further illustrated with reference to the following Examples which are intended to aid in the understanding of the present invention, but which are not to be construed as a limitation thereof.

### EXAMPLES

### Materials

2-vinyl-4-hydroxymethyl-1,3-dioxolane (HMVD) was obtained from Degussa Corporation, New Jersey.

2-vinyl-4-hydroxybutyl-1,3-dioxolane (HBVD) was obtained from Union Carbide Corporation, North Carolina. Two samples of this material were received, one of 94 % purity and the other of 83 % purity.

DESMODUR W, DESMODUR N100, DESMODUR N3200 and DESMODUR N3400 were received from Bayer Corporation, Pennsylvania.

1,4-diazabicyclo (2.2.2) octane (DABCO), (98 % purity) and dibutyltin dilaurate (95 % purity) were obtained from Aldrich Chemical Company, Wisconsin.

Cobalt naphthenate (6% Cobalt NAP-ALL), contains 6% cobalt) and cobalt octoate (Catalyst 510, contains 12 % cobalt) were obtained from OM Group, Inc., Ohio and used as received.

The ratio of vinyl dioxolane to isocyanate during synthesis of vinyl dioxolane end-capped polyurethane oligomers of the present invention is determined by the free-NCO content of the isocyanate. Unless otherwise specified, one free-NCO is reacted with each hydroxy methyl substituent on the reactive vinyl dioxolane. The percent of catalyst is based on the combined weight of the vinyl dioxolane and isocyanate components.

### Methods

The apparatus used to prepare PVD coating material from reaction of hydroxy-substituted vinyl dioxolane with aliphatic diisocyanate is conventional laboratory apparatus. A typical experimental procedure used for the preparation of PVD coating material described in the following examples:
· Working in a glovebag under nitrogen, the appropriate amount of vinyl dioxolane end-capped polyurethane oligomers and polymerization catalyst are weighted out into a three-neck flask equipped with a nitrogen inlet and mechanical stirrer. The appropriate amount of aliphatic or cycloaliphatic isocyanate or polyisocyanate or isocyanate-endcapped aliphatic prepolymer is weighed out into a slow-drip funnel.
· After assembling the reaction vessel inside the glovebag, it is removed and set up inside a laminar flow hood and purged with nitrogen. The slow-drip funnel is removed from the glovebag and attached to the reaction vessel.
· The reaction vessel is lowered into an oil bath which has been preheated to the selected reaction temperature. The drip funnel is opened and the aliphatic or cycloaliphatic isocyanate or polyisocyanate or isocyanate-endcapped aliphatic prepolymer is slowly added to the reaction vessel over a period of 1 hour. The reaction mixture is stirred under a positive nitrogen atmosphere and is monitored closely for changes in viscosity or appearance.
· Using a sealed IR cell, an IR spectra of the reaction mixture is obtained as soon as all of the aliphatic or cycloaliphatic isocyanate or polyisocyanate or isocyanate-endcapped aliphatic prepolymer has been added. Thereafter, IR spectra of the reaction mixture is obtained every hour or whenever a significant viscosity or appearance change occurs.
· The progress of the reaction is monitored by the disappearance of the -N = C = C isocyanate stretch at 2270 cm⁻¹ and the appearance of the urethane -C=O and =N-H stretches at 1690 cm⁻¹ and 3330 cm⁻¹, respectively.
· The reaction is complete when the -N = C = O stretch has completely disappeared, coinciding with sharp -C=O and =N-H peaks.

At this point, all of the reaction mixture is transferred to a container and stored for use in preparing the coating compositions of the present invention.

### Coating Procedures

Both bare and chromated aluminum test-panels (6 in. x 3 in. x 0.032 in.) were used as indicated in the following examples. A typical procedure for preparation of the hand-coated PVD coating test panels follows:
· Wipe clean all panels using acetone and place cleaned panels in an oven at 100°C for 1 hour.
· Remove panels from oven and place Scotch Tape around the perimeter of each panel to act as a shim to set the coating thickness. Take care to avoid trapping air bubbles when placing the tape down as this will lead to nonuniform coating thicknesses.
· Mix the appropriate amount of cobalt catalyst with the vinyl dioxolane end-capped polyurethane oligomers of the present invention and stir for at least 1 minute to ensure uniform mixing of the thus obtained coating composition.
· Place an appropriate amount of the coating compositions on the panel to be coated and use a glass slide to spread the coating compositions across the panel.
· Let the coated panel stand at room temperature. After 24 hours, observe and record the appearance and the degree of cure of the coated panel.
· Place the panel in an oven at 50°C and remove after 24 hours to evaluate the effects of post cure.

The apparatus used to prepare spray-coated samples of coating compositions of the present invention on aluminum test panels is a conventional spray apparatus which is capable of heating the coating composition if desired. Both bare and chromated aluminum test panels (6 in. x 3 in. x 0.032 in.) were used in these experiments. A typical procedure for preparation of the test panels spray-coated with coating compositions of the present invention follows:
· Wipe clean all panels using acetone and place cleaned panels in an oven at 100°C for 1 hour.
· Mix the appropriate amount of cobalt catalyst to a composition comprising at least one vinyl dioxolane end-capped polyurethane oligomers of the present invention and stir for at least 1 minute to ensure uniform mixing.
· Place the thus formed coating composition into a beaker and place the beaker inside a spray canister. Oil may be placed inside the canister to fill around the outside of the beaker and may be heated to a selected temperature by means of heater bands wrapped around the outside of the spray canister. In some cases it is desirable to heat the coating compositions of the present invention to lower the viscosity of the coating composition to facilitate the spraying.
· Attach an air line to the canister, ensuring that the air line has an oil and moisture trap.
· Coating compositions of the present invention were sprayed under different temperature and pressure conditions as described below.

DESMODUR is sometimes abbreviated "DES" in the following Examples.

### EXAMPLE 1: Reaction of 2-vinyl-4-hydroxymethyl-1,3-dioxolane (HMVD) with DESMODUR W

The Conditions: Reactants were weighed and added to reaction vessel in a glove-bag under nitrogen. The reaction vessel has nitrogen inlet.

| Exper. No. | Components (in grams) | Observations |
|---|---|---|
| 3a | HMVD (52.19) + DES W (47.54) | Components were mixed at room temperature. Initial viscosity was water-like. Let stir for 12 hours. Solution remained clear with no significant viscosity changes. Heated at 50°C. Viscosity increased with time. IR taken after 6 hours and 30 hours of heating showed no significant change from that taken at beginning of experiment. |
| 3b | HMVD (52.19) + DES W (47.54) + 0.03 % Tin (.03) | Components were mixed at room temperature. Initial viscosity was water-like but soon after addition of the tin catalyst the solution became viscous (honey-like) and turned white. Let stir at room temperature. After 1 hour, mixture became too viscous to stir. |
| 3c | HMVD (52.19) + DES W (47.54) + 0.1% Tin (.10) | Components were mixed at room temperature. Initial viscosity was water-like but soon after addition of the tin catalyst the solution became viscous (honey-like) and turned yellow. Let stir at room temperature. After 1 hour, mixture became too viscous to stir. |
| 3d | HMVD (11.57) + DES W (8.43) + 0.01 % Tin (.002) | Components were mixed at room temperature. Initial viscosity was water-like and mixture was clear. IR taken after 20 minutes showed a large -N=C=O peak. After 70 minutes an IR showed the -N=C=O stretch was decreasing and the =N-H and -C=O stretches re beginning to appear. The solution became viscous (honey-like) and turned clear yellow. IR after 3.5 hours showed only change to be the growth of the =N-H stretch and narrowing of the -N=C=O peak. After 4 hours the viscosity increased to that of a liquid rubber cement, with yellowish white coloration. The -C-O-C stretch of the dioxolane ring was unchanged throughout this experiment. |
| 3e | HMVD (52.19) + DES W (47.54) + 0.03 % DABCO (.03) | Components were mixed at room temperature. Initial viscosity was water-like and mixture was clear yellow. IR taken after 1 hour showed a large -N=C=O peak. After 5 hours -N=C=O peak had narrowed considerably but has not decreased. -C =0 peak began to appear. Mixture was stirred at room temperature overnight. IR showed -C=O stretch increasing. Began to heat mixture at 50°C. Shortly after heat was applied the reaction mixture turned white and viscosity increased. IR after 1, 3 and 5 hours of heating progressively showed the =N-H shoulder beginning to appear, as well as the -N=C=O peak sharpening and the -C=O peak growing. After 5 hours of heating, the viscosity was that of liquid rubber. The -C-O-C stretch of the dioxolane ring was unchanged throughout this experiment. |

### EXAMPLE 2: Reaction of 2-vinyl-4-hydroxymethyl-1,3-dioxolane (HMVD) with DESMODUR N100

Conditions: The reactants were weighed and added to the reaction vessel in a glove-bag under nitrogen. Reaction vessel has nitrogen inlet.

| Experiment No. | Components | Observations |
|---|---|---|
| | | |
| 4 | HMVD + DES N100 | Components were mixed at room temperature. Initial viscosity is syrup-like. Let stir for 12 hours. Solution turns yellow but shows no significant increase in viscosity. Heated to 50°C**.** Viscosity increases with time and bubbles starts to form. IR taken after 6 hours and 30 hours of heating shows marked decrease in -N=C=O intensity. After 72 hours solution has almost solidified. IR shows marked decrease in -N=C=O intensity. |

### EXAMPLE 3:Reaction of 2-vinyl-4-hydroxymethyl-1,3-dioxolane (HMVD) with DESMODUR N3200

Conditions: In Experiment No. 5a, the reactants were weighed and added to the reaction vessel in glove-bag under nitrogen. Reaction vessel had a nitrogen inlet. In Experiments 5b and 5c, HMVD and DABCO were weighed and added to the reaction vessel and DES N3200 was added to a drop funnel, in glove-bag under nitrogen. Reaction vessel had a nitrogen inlet. DES N3200 was slowly added, over 1 hour, to the reaction vessel via the drop funnel.

| Experiment No. | Components (in grams) | Observations |
|---|---|---|
| 5a | HMVD (8.62) + DES N3200 (11.30) | Components were mixed at room temperature. Initial viscosity was syrup-like. Let stir for 12 hours. Solution turned yellow but showed no significant increase in viscosity. Heated to 50°C. Viscosity increased with time and bubbles started to form. IR taken after 6 hours and 30 hours of heating showed marked decrease in -N=C=O intensity. After 72 hours solution had almost solidified. IR shows marked decrease in -N=C=O intensity. |
| 5b | HMVD (8.62) + DES N3200 (11.30) + 0.05% DABCO (.01) | HMVD and DABCO were stirred at 50°C while DES N3200 was added slowly via a drop funnel over a period of 1 hour. Initial viscosity was syrup-like. Mixture turned yellow 5 minutes after addition was completed. An IR taken 0.5 hours after completion of the addition of DES N3200 showed all of the important peaks showing no sign of reaction. After 1 hour the mixture had gelled considerably and so the heat was removed. An IR 1.5 hours later showed the -N=C=O stretch getting sharper but no other significant changes. 18 hours after the heat was removed, an IR showed the -N=C=O stretch decreasing with several peaks appearing in that region. The = N-H peak had begun to form. At end of experiment the viscosity was paste-like, with an orange coloration. The -C-O-C stretch of the dioxolane ring was unchanged throughout this experiment. |
| 5c | HMVD (43.08) + DES N3200 (56.50) + 0.1 % DABCO (.10) | HMVD and DABCO were stirred at 70°C while DES N3200 was added slowly via a drop funnel over a period of 1 hour. Initial viscosity was syrup-like. Mixture turned yellow 15 minutes after addition began. An IR taken upon complete addition of DES N3200 showed the -N=C=O stretch decreased significantly and sharp =N-H and -C=O peaks being formed. The mixture had a reddish color at this point. The reaction was topped 2.5 hours after complete addition with the mixture having an orange color and paste-like viscosity. IR showed the -N=C=O peak had almost completely disappeared and also showed sharp =N-H and -C=O peaks. The -C-O-C- stretch of the dioxolane ring was unchanged throughout this experiment. |

### EXAMPLE 4: Reaction of 2-vinyl-4-hydroxymethyl-1,3-dioxolane (HMVD) with DESMODUR N3400

Conditions: HMVD and DABCO were weighed and added to reaction vessel and DES N3400 was added to drop funnel, in glove-bag under nitrogen. Reaction vessel has nitrogen inlet. DES N3400 was slowly added, over 1 hour, to the reaction vessel via the drop funnel.

| Experiment No. | Components (in grams) | Observations |
|---|---|---|
| | | |
| 6a | HMVD (58.06) + DES N3400 (41.21) + 0.1 % DABCO (.10) | HMVD and DABCO were stirred at 80°C while DES N3400 was added slowly via a drop funnel over a period of 1 hour. Initial viscosity was syrup-like. Mixture turned yellow 15 minutes after addition began. An IR taken upon complete addition of DES N3400 showed the -N=C=O stretch decreased significantly and sharp =N-H and -C=O peaks being formed. The mixture had a reddish color at this point. The reaction was stopped 2.5 hours after complete addition with the mixture having an orange color and paste-like viscosity. IR showed the -N=C=O peak had almost completely disappeared and also showed sharp =N-H and -C=O peaks. The-C-O-C-Stretch of the dioxolane ring was unchanged throughout this experiment. |
| 6b | HMVD (41.21) + DES N3400 (58.06) + 0.1 % DABCO (.10) | HMVD and DABCO were stirred at 70°C while DES N3400 was added slowly via a drop funnel over a period of 1 hour. Initial viscosity was symp-like. Mixture turned yellow 15 minutes after addition began. An IR taken upon complete addition of DES N3400 showed the -N=C=O stretch decreased significantly and sharp =N-H and -C=O peaks being formed. The mixture had a reddish color at this point. IRs taken after 2, 2.75 and 5.5 hours showed the reaction going to completion where the =N-H and the -C=O peaks become more defined and the -N=C=O peak almost completely disappears. Viscosity at this point was honey-like with an orange coloration. The -C-O-C- stretch of the dioxolane ring was unchanged throughout this experiment. |

### EXAMPLE 5: Reaction of 2-vinyl-4-hydroxybutyl-1,3-dioxolane (HBVD) with DESMODUR W

Conditions: HBVD and Tin catalyst were weighed and added to reaction vessel and DES W was added to drop funnel, in a glove-bag under nitrogen. Reaction vessel had nitrogen inlet. DES W was slowly added, over 1 hour, to the reaction vessel via the drop funnel.

| Experiment No. | Components (in grams) | Observations |
|---|---|---|
| 7a | HBVD (11.57) + DES W (8.43) + 0.01 % Tin (.002) | HBVD and tin were stirred at room temperature while DES W was added slowly via a drop funnel over a period of 1hour. Initial viscosity was water-like. An IR taken after complete addition showed the =N-H shoulder and the -C=O stretch appearing and also shows a sharp -N=C=O stretch. At this point the mixture has become milky and viscosity had increased. An IR taken 1 hour after addition showed stronger and sharper -C=O and =N-H peaks and a decreased -N=C=O peak. IRs taken at 2.5 and 5 hours follow this trend. After 5 hours, the mixture was milky white and had the viscosity of tar. The -C-O-C- stretch of the dioxolane ring was unchanged throughout this experiment. |
| 7b | HBVD (11.57) + DES W (8.43) + 0.03% DABCO (.006) | HBVD and DABCO were stirred at 60°C while DES W was added slowly via a drop funnel over a period of 1 hour. Initial viscosity was water-like. An IR taken after complete addition showed the =N-H shoulder and the -C=O stretch appearing and also showed a sharp -N=C=O stretch. At this point the mixture was clear and viscosity had not increased. IRs taken at 1 and 2.5 hours showed the reaction continuing very slowly so the temperature was increased to 70°C after 4 hours. IRs taken at 1 and 4.5 hours at 70°C again showed the reaction progressing slowly, with the = N-H and the -C=) peaks becoming more defined and the -N=C=O peak decreasing with time. Viscosity was tar-like at end of experiment. The -C-O-C- stretch of the dioxolane ring was unchanged throughout this experiment. |
| 7c | HBVD (11.57) + DES W (8.43) + 0.1 % DABCO (.02) | HBVD and DABCO were stirred at 80°C while DES W was added slowly via a drop funnel over a period of 1 hour. Initial viscosity was water-like. An IR taken after complete addition showed the =N-H shoulder and the -C=O stretch appearing and also showed a sharp -N=C=O stretch. At this point the mixture was clear and viscosity had not increased. IRs taken after 2.5, 5, 7, 8 and 8.75 hours showed the reaction going to completion where the =N-H and the -C=O peaks become more defined and the -N=C=O peak almost completely disappears. Mixture had gotten cloudy and more viscous as the reaction progresses. Viscosity is tar-like at end of experiment. The -C-O-C stretch of the dioxolane ring was unchanged throughout this experiment. |

### EXAMPLE 6:Reaction of 2-vinyl-4-hydroxybutyl-1,3-dioxolane (HBVD) with DESMODUR N3200

Conditions: HBVD and DABCO were weighed and added to reaction vessel and DES N3200 was added to drop funnel, in glove-bag under nitrogen. Reaction vessel had nitrogen inlet. DES N3200 was slowly added, over 1 hour, to the reaction vessel via the drop funnel.

| Experiment No. | Components (in grams) | Observations |
|---|---|---|
| 8a | HBVD (10.50) + DES N3200 (10.23) + 0.05 % DABCO (.01) | HBVD and DABCO were stirred at 50°C while DES N3200 was added slowly via a drop funnel over a period of 1 hour. Initial viscosity was syrup-like. An IR taken after complete addition showed the =N-H shoulder and the -C=O stretch appearing and also showed a sharp -N=C=O stretch. At this point the mixture was clear and viscosity had not increased. After 2 hours, the mixture had gelled and the heat was removed. IRs taken after 2.5, 18, 22 and 88 hours (over weekend) showed the reaction going to completion where the = N-H and the -C =O peaks become more defined and the -N=C=O peak almost completely disappears. Mixture got cloudy and more viscous as the reaction progressed. Viscosity was tar-like at end of experiment. The -C-O-C stretch of the dioxolane ring was unchanged throughout this experiment. |
| 8b | HBVD (10.50) + DES N3200 (10.23) + 0.05% DABCO (.01) | HBVD and DABCO were stirred at 70°C while DES N3200 was added slowly via a drop funnel over a period for 1 hour. Initial viscosity was syrup-like. An IR taken after complete addition showed the =N-H shoulder and the -C=O stretch appearing and also showed a sharp -N=C=O stretch. At this point the mixture was clear and viscosity had not increased. After 2.5 hours, the viscosity had not changed. IRs taken after 2.5 and 3.5 hours show the reaction going to completion where the =N-H and the -C=O peaks become more defined and the -N=C=O peak almost completely disappears. Viscosity was tar-like at end of experiment. The -C-O-C- stretch of the dioxolane ring was unchanged throughout this experiment. |
| 8c | HBVD (10.50) + DES N3200 (10.23) + 0.1 % DABCO (.02) | HBVD and DABCO were stirred at 80°C while DES N3200 was added slowly via a drop funnel over a period of 1 hour. Initial viscosity is syrup-like. An IR was taken after complete addition showed the =N-H shoulder and the -C=O stretch appearing and also showed a sharp -N=C=O stretch. At this point the mixture was clear and viscosity had not increased. After 2.5 hours, the viscosity had not changed. IRs taken after 2.5 and 3.5 hours showed the reaction going to completion where the =N-H and the -C=O peaks became more defmed and the -C=C=O peak almost completely disappeared. Viscosity was tar-like at the end of the experiment. The -C-O-C- stretch of the dioxolane ring was unchanged throughout this experiment. |

### EXAMPLE 7: Reaction of 2-vinyl-hydroxybutyl-1,3-ioxolane (HBVD) with DESMODUR N3400

Conditions: HBVD and DABCO were weighed and added to reaction vessel and DESMODUR N3400 was added to drop funnel, in glove-bag under nitrogen. Reaction vessel had nitrogen inlet. DESMODUR N3400 was slowly added, over 1 hour, to the reaction vessel via the drop funnel.

| Experiment No. | Components (in grams) | Observations |
|---|---|---|
| | | |
| 9a & 9b | HBVD (14.35) + DES N3400 (15.28) + 0.1 % DABCO (.030) | HBVD and DABCO were stirred at 80°C while DES N3400 was added slowly via a drop funnel over a period of 1 hour. Initial viscosity was almost water-like. An IR taken after complete addition showed the =N-H shoulder and the -C=O stretch appearing and also showed a sharp -N=C=O stretch. At this point the mixture was clear and viscosity is low. After 2.5 hours, the viscosity had not changed. IRs taken after 1, 2, 2.75 and 3.75 hours showed the reaction going to completion where the =N-H and the -C=O peaks become more defined and the -N=C=O peak almost completely disappears. Viscosity was less than that of honey at end of experiment. The -C-O-C- stretch of the dioxolane ring was unchanged throughout this experiment. |
| | | |

### EXAMPLE 8: PVD hand-coating experiments

| PVD System | Percent Cobalt Octoate | Viscosity | Observation | Coating Ranking |
|---|---|---|---|---|
| | | | | |
| HMVD + DES N3200 | 0.5 | V. High (Paste) | Very difficult to apply coating. Helped if panel was heated. Cured to tough, tacky film overnight at room temperature. Post-cured for 24 hour at 50°C to form tough, hard, clear glossy coating. | 4 |
| HMVD + DES N3400 | 0.5 | Medium (Honey) | Relatively easy to apply coating. Got good wet-out of surface. Cured to tough, tacky film overnight. Post-cured for 24 hour at 50°C to form tough, hard, clear glossy coating. | 2 |
| HBVD + DES W | 0.5 | High (Tar) | Difficult to apply coating. Helped if panel was heated. Cured to tough, tacky film overnight at room temperature. Post-cured for 24 hour at 50°C to form tough, hard, coating. | 5 |
| HBVD + DES N3200 | 0.5 | High (Tar) | Relatively easy to apply coating. Got good wet-out of surface. Cured to tough, tacky film overnight at room temperature. Post-cured for 24 hour at 50°C to form tough, hard, coating. | 3 |
| HBVD + DES N3400 | 0.5 | Low (Syrup) | East to apply coating. Got good wet-out of surface. Cured to tough, tacky, cloudy film overnight at room temperature. Post-cured for 24 hour at 50°C to form tough, hard, clear coating. | 1 |

Coating Ranking 1 is the highest ranking.

### EXAMPLE 9: Spray Coating Experiments

Spraying was performed using a SnapOn spray gun, with the reaction mixture kept at 80°C inside the spay vessel by using heater bands wrapped around the spray unit.

| Experiment No. | PVD System | Spray Pressure | Observations |
|---|---|---|---|
| | | | |
| 1 | HBVD/DES N3400 | 20 | Achieved spraying, but did not get a very good coating. |
| 2 | HBVD/DES N3400 | 40 | Achieved spraying, but did not get a very good coating, although better than Experiment No. 1. |
| 3 | HBVD/DES N3400 | 80 | Achieved spraying and got reasonable coating. |
| 4 | 50% (HBVD/DES N3400) + 50% HMVD | 80 | Got excellent spray-stream and wet-out of substrate. Pressure appeared to be too great for smooth coatings. |
| 5 | 50% (HBVD/DES N3400) + 50% HMVD | 60 | Got excellent spray-stream and wet-out of substrate. Coating looked better than Experiment No. 4, but again. pressure appeared too great to achieve smooth coasting. |
| 6 | 50% (HBVD/DES N3400) + 50% HBVD | 20 | Got excellent spray-stream and wet-out of substrate. Coating looked very smooth. |

### EXAMPLE 10: Coating Test Panels

Testing of the no VOC coatings was carried out. The Table below illustrates the coating compositions tested. The coating compositions used were prepared in accordance with the previous examples.

| Panel No. | Aluminum Type | Coating Type |
|---|---|---|
| | | |
| 1 a-d | Bare | HMVD/DES N3200/0.1 % DABCO/0.5 % cobalt octoate |
| 2 a-d | Chromated | HMVD/DES N3200/0.1% DABCO/0.5% cobalt octoate |
| 3 a-d | Bare | HMVD/DES N3400/0.1% DABCO/0.5% cobalt octoate |
| 4 a-d | Chromated | HMVD/DES N3400/0.1% DABCO/0.5% cobalt octoate |
| 5 a-d | Bare | HBVD/DES N3200/0.1 % DABCO/0.5% cobalt octoate |
| 6 a-d | Chromated | HBVD/DES N3200/0.1 % DABCO/0.5 % cobalt octoate |
| 7 a-d | Bare | HBVD/DES N3400/0.1 % DABCO/0.5 % cobalt octoate |
| 8 a-d | Chromated | HBVD/DES N3400/0.1 % DABCO/0.5 % cobalt octoate |

### EXAMPLE 11: Cross-Hatch Adhesion Testing

Cross-hatch adhesion testing was performed in accordance with ASTM D3359-95 (Appendix A.1). Highland 6200 semi-transparent tape (3/4 in wide with a peel strength of 24 ox/in.) was used.

This test method is intended to assess the adhesion of coating films to metallic substrates by applying and removing pressure-sensitive tape over cuts made in the film. A lattice pattern with 11 cuts in each direction is made in the coating to substrate, pressure-sensitive tape is applied over the lattice and then removed, and adhesion is evaluated by comparison with descriptions and illustrations. The results of testing are presented below.

| PANEL NO. | TEST OBSERVATIONS | RATING (ASTM D3359) |
|---|---|---|
| | | |
| 1 a-d | Peeling off tape did not affect the coating. | 5B |
| 2 a-d | Peeling off tape did not affect the coating. | 5B |
| 3 a-d | Peeling off tape did not affect the coating. | 5B |
| 4 a-d | Peeling off tape did not affect the coating. | 5B |
| 5 a-d | Peeling off tape did not affect the coating. | 5B |
| 6 a-d | Peeling off tape did not affect the coating. | 5B |
| 7 a-d | Peeling off tape did not affect the coating. | 5B |
| 8 at | Peeling off tape did not affect the coating. | 5B |

All of the coated panels passed this test when using this particular tape.

### EXAMPLE 12: Pencil Hardness Testing

Pencil hardness and scratch hardness were determined for each of the selected coatings in accordance with ASTM D3362-92a.

This test method covers a procedure for rapid, inexpensive determination of the film hardness of an organic coating on a substrate in terms of drawing leads or pencil leads of known hardness. The coated panel is placed firmly on a firm horizontal surface. The pencil is held firmly against the film at a 45° angle (point away from the operator) and pushed away from the operator in a 1/4 in. (6.5 mm) stroke the process is started with the hardest pencil and continued down the scale of hardness to either of two end points: one, the pencil that will not cut into or gouge the film (pencil hardness), or two, the pencil that will not scratch the film (scratch hardness). The results of testing are presented below.

| PANEL NO. | a | b | c | d | TEST |
|---|---|---|---|---|---|
| | | | | | |
| 1 | < 4B | < 4B | < 4B | < 4B | Pencil Hardness |
| | < 4B | < 4B | < 4B | < 4B | Scratch Hardness |
| | | | | | |
| 2 | <4B | <4B | <4B | >4B | Pencil Hardness |
| | < 4B | < 4B | < 4B | < 4B | Scratch Hardness |
| | | | | | |
| 3 | < 4B | < 4B | < 4B | < 4B | Pencil Hardness |
| | < 4B | < 4B | < 4B | < 4B | Scratch Hardness |
| | | | | | |
| 4 | < 4B | < 4B | < 4B | < 4B | Pencil Hardness |
| | < 4B | < 4B | < 4B | < 4B | Scratch Hardness |
| | | | | | |
| 5 | 5H | 5H | 4H | 5H | Pencil Hardness |
| | 2B | 4B | 2B | 4B | Scratch Hardness |
| | | | | | |
| 6 | 5H | 5H | 5H | 5H | Pencil Hardness |
| | 2B | 2B | 2B | 2B | Scratch Hardness |
| | | | | | |
| 7 | 5H | 5H | 5H | 5H | Pencil Hardness |
| | 4B | 4B | 4B | 4B | Scratch Hardness |
| | | | | | |
| 8 | 5H | 5H | 5H | 5H | Pencil Hardness |
| | 4B | 4B | 2B | 2B | Scratch Hardness |

The results show that the HBVD-based coating samples are a much harder coating than the HMVD-based coatings, with an average 5B pencil hardness which is at the higher end of the hardness scale.

### EXAMPLE 13: Fluid-Resistance Testing

The resistance of different coated test-panels coated in accordance with the present invention to water, MEK, hydraulic fluid and cleaning solution (Forest-Kleen, Atlantic Cleaning Products) was tested by immersion in the fluid for 72 hours. Pencil hardness testing before and after immersion as well as physical observations were used to quantify the resistance of a coating to a particular fluid. The resistance of our coatings to these respective fluids is presented in Tables 13-1 though 13-4.

**Table 13-1: Results of coatings immersed in water for 72 hours**

| Panel No. | Observations (Removed after 72 hr) | Observations (12 hr after removal) | Residual Pencil Hardness | Residual Scratch Hardness |
|---|---|---|---|---|
| | | | | |
| la | Some blistering on coating surface, possibly due to delamination. Film is clouds | Film is cloudy but has a hard finish. | 5H | HB |
| 2a | Film has become cloudy, but no surface defects observed. | Same as la. | 5H | HB |
| 3a | Same as 2a. | Same as 1a. | 5 | B |
| 4a | Same as 2a. | Same as 1a. | HB | 2B |
| 5a | Same as 2a. | Film is slightly cloudy but has a slight gloss. A hard finish is observed. | 3H | HB |
| 6a | Same as 2a. | Same as 5a. | 3H | HB |
| 7a | Same as 2a. | Film is slightly cloudy and matty. A hard finish is observed. | 4H | HB |
| 8a | Same as 2a. | Same as 7a. | 4H | HB |

**Table 13-2: Results of coatings immersed in MEK for 72 hours**

| Panel No. | Observations (Removed after 72 br) | Observations (12 hr after removal) | Residual Pencil Hardness | Residual Scratch Hardness |
|---|---|---|---|---|
| 1b | Film cloudy, matty and tacky but shows no sign of delamination. | Surface is 80% smooth and clear with 20% being matty and opaque. | 5H | HB |
| 2b | Same as 1b. | Film surface is cloudy and matty. | 3H | 4B |
| 3b | Same as 1b. | Same as 2b. | 3H | 2B |
| 4b | Same as 1b. | Same as 2b. | 3H | 2B |
| 5b | Film is cloudy, tacky with approximately 25 % delamination, | Edges of film is glossy and clear and censer of film is cloudy yet glossy. | 3H | 2B |
| 6b | Same as 5b. | Same as 5b. | 3H | 2B |
| 7b | Same as 5b. | Film is cloudy and matty in appearance. | 3H | 2B |
| 8b | Same as 5b. | Same as 7b. | 3H | 2B |

**Table 13-3: Results of coatings immersed in cleaning solution for 72 hours**

| Panel No. | Observations (Removed after 72 hr) | Observations (12 hr after removal) | Residual Pencil Hardness | Residual Scratch Hardness |
|---|---|---|---|---|
| 1c | Center portion of film is degraded by cleaner. film is cloudy and brittle. | Remaining film is hard and opaque. | 3H | 4B |
| 2c | Film adhered to substrate with no delamination. Film is cloudy and britte. | Same as 1c. | 3H | 4B |
| 3c | Same as 1c. | Same as Ic. | 3H | 3H |
| 4c | Same as 2c. | Same as Ic. | 2B | 2B |
| 5c | 70% of film is degraded and delaminated from substrate and is cloudy and brittle. | Remaining film is glossy, cloudy and hard. | 3H | |
| 6c | 10% of film is degraded and delaminated and is cloudy and brittle. | Same as 5c. | 2B | |
| 7c | Same as 5c. | Same as 5c. | 3H | |
| 8c | Same as 6c. | Same as 5c. | 2B | |

**Table 13-4: Results of coatings immersed in hydraulic fluid for 72 hrs.**

| Panes No. | Observations (Removed after 72 hr) | Observations (12 hr after removal) | Residual Pencil Hardness | Residual Scratch Hardness |
|---|---|---|---|---|
| | | | | |
| 1d | No sign of defects or discoloration of film | No sign of defects or discoloration of film. | 3H | 4B |
| 2d | Same as 1d. | Same as 1d. | 3H | 4B |
| 3d | Same as 1d. | Same as 1d. | 3H | 2B |
| 4d | Same as 1d. | Same as 1d. | 2B | 4B |
| 5d | Same as 1d. | Same as 1d. | 3H | 2B |
| 6d | Same as 1d.. | Same as 1d. | 3H | 2B |
| 7d | Same as 1d. | Same as 1d. | 3H | 2B |
| 8d | Same as 1d. | Same as 1d. | 3H | 2B |

### EXAMPLE 14: MEK Resistance And Impact Elongation Testing

Panel No. 7 was provided with a HBVD/DESMODUR N3400 coating on a bare aluminum panel while panel No. 8 was provided with the same coating system applied over a chromated aluminum panel.

### Panel No. 7:

Average Film Thickness: 0.8 mils.

MEK Resistance: 25 double MEK rubs.

IMPACT Elongation: 60 %

1 week in water: Slight softening, but the adhesion to bare aluminum was too weak to test for pencil hardness.

### Panel No. 8:

Average Film Thickness: 0.9 mils.

MEK Resistance: 25 double MEK rubs.

IMPACT Elongation: 60 %

1 week in Hy Jet IV: The surface appears to be hard, but the adhesion is too poor to run pencil hardness. Some softening was

noted but not measured.

### Example 15: Coating: HBVD/DES N3400/Cobalt Octoate

The following tests were conducted by the Navy on the coating from a hand coated sample of HBVD/DES N3400/cobalt. The tests were conducted to Military Specifications.

| **ADHESION:** | **Required Range** | |
|---|---|---|
| Dry Scrape | 0.5 - 10+kg | < 1 |
| Wet Scrape (24 hr/RT) | 0.5 - 10+kg | |
| Wet Scrape (7 day/150°F) | 0.5 - 10+kg | |
| Dry Tape "A" Method | 0 - 5 (A) | 5A |
| Wet Tape (24 hr/RT) | 0 - 5 (A) | 5A |
| Wet Tape (4 day/120°F) | 0 - 5 (A) | |
| West Tape (7 day/150°F) | 0 - 5 (A) | |

| **CORROSION RESISTANCE:** | | |
|---|---|---|
| Salt Spray Bare (336 hr) | P, +, -, F | |
| Salt Spray Ep/Gr (1000 hr) | P, +, -, F | |
| Salt Spray (2000 hr) | P, +, -, F | |
| Salt Spray (D1654) Scribed | % Area | |
| Salt Spray (D1654) Unscribed) | 0 - 10 | |
| SO2 Spray (500 hr) | P, +, -, F | |
| SO2 Spray (D1654) Scribed | % Area | |
| SO2 Spray (D1654) Unscribed | 0-10 | |
| Filiform Corrosion | P, +, -, F | |
| ELS | N/A | |

| **FLUID/WEATHER RESISTANCE:** | | |
|---|---|---|
| H2O Resistance (24 hr/RT) | P, +, -, F | |
| H2O Resistance (4 day/120°F) | P, +, -, F | |
| H2O Resistance (7 day/150°F) | P, +, -, F | |
| Humidity Resistance | P, +, -, F | PASS 14 days at 120°F/100%RH |
| 23699 Oil (24 hr/250°F) | P, +, -, F | PASS |
| 83282 Hydraulic (24 hr/150°F) | P, +, -, F | PASS |
| Hydrocarbon JP-5 (7 day/RT) | P, +, -, F | PASS |
| Skydrol (7 day/RT) | P, +, -, F | |
| Skydrol (30 day/RT) | P, +, -, F | |
| Solvent Resistance (100 MEK rubs) | P, +. -, F | SL SOFTENING (easily scraped by fingernail |
| Heat Resistance (1 hr/250°F) | P, +, -, F | SL YELLOWING (visual to naked eye) |
| Het Resistance (4 hr/250°F) | P, +, -, F | |
| Weatherometer (500 hr) | P, +.., F | |
| QUV (500 hr) | P, +, -, F | |

| **FLEXIBILITY:** | | |
|---|---|---|
| GE Impact test | 0.5% - 60% | 60 |
| Gardner Impact (direct/reverse) | in-1b | |
| Mandrel Bend (RT) | 0.125"...C.75" | |
| Mandrel Bend (-60°F) | 0.125"...C.75" | |
| | | |

| **MISCELLANEOUS:** | | |
|---|---|---|
| Thickness | mils | 55 to 95 |
| Viscosity (admix. Ford #4 cup) | seconds | |
| Pot life (viscosity after 2 hr) | seconds | |
| Pot life (viscosity after 4 hr) | seconds | |
| Set to touch | minutes | |
| Tack free | hours | |
| Dry hard | hours | |
| Color | L.a.b. | |
| Gloss (20°) | % reflectarce | |
| Gloss (60°) | % reflectarce | 27 |
| Gloss (85°) | % reflectarce | |
| Strippability | % removed | 100 |
| Cleanability | % cleaned | |
| Comments | | SOFT, WAXY FEEL |
| | | |

## Claims

1. A coating composition containing essentially no volatile organic components, the composition comprising:
(a) at least one oligomer which consists of the reaction product of
(i) 2-vinyl-4-hydroxymethyl-1,3-dioxolane (HMVD) or at least one substituted vinyl dioxolane monomer having the formula 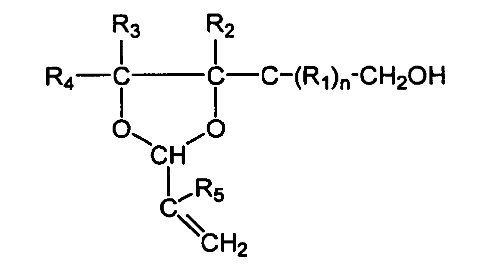 wherein R₁ is an alkyl group, n is a number from 0 to about 10, and R₂, R₃, R₄ and R₅ are independently hydrogen or an alkyl group having from 1 to about 10 carbon atoms; and
(ii) at least one isocyanate or polyisocyanate having the formula Rₑ(NCO)ₚ
wherein R₆ is an aliphatic or cycloaliphatic alkyl group having from 1 to about 10 carbon atoms and p is at least 1, or
at least one isocyanate-endcapped aliphatic urethane prepolymer having the formula 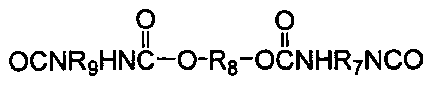 wherein R₇, R₈ and R₉ are independently an aliphatic or cycloaliphatic alkyl group having from 1 to about 10 carbons; and
(b) at least one catalyst to initiate polymerization of the oligomers of step (a) to form a coating.

2. The coating composition of claim 1, wherein the aliphatic polyisocyanate is at least one of hexamethylene diisocyanate, 4,4-bis(cyclohexyl)methane diisocyanate, bis(4-isocyanato-cyclohexyl)methane, isophorone diisocyanate, 1-methylcyclohexane-2,4-diisocyanate and 4,4',4"-tricyclohexylmethane triisocyanate.

3. A coating composition according to claim 1, wherein the aliphatic polyisocyanate is at least one 1,6-hexamethylene diisocyanate based polyisocyanate.

4. A coating composition according to claim 3, wherein the 1,6-hexamethylene diisocyanate based polyisocyanate has a viscosity at 23°C of from about 90 to about 250 mPa·s.

5. A coating composition according to claim 3, wherein the 1,6-hexamethylene diisocyanate based polyisocyanate has a viscosity at 25°C of from about 1,300 to about 2,200 mPa·s.

6. A coating composition according to claim 1, wherein the isocyanate end-capped aliphatic urethane prepolymer is a prepolymer prepared from at least one hexamethylene diisocyanate aliphatic polyester polyol or polyether polyol.

7. A coating composition according to claim 3, wherein the 1,6-hexamethylene diisocyanate based polyisocyanate has a viscosity at 25°C of 1300-2200 mPa·s or at 25°C of from about 5,000 to about 10,000 mPa·s.

8. A coating composition according to claim 1, wherein the viscosity of the polyisocyanate at about 25°C is in the range of from about 90 to about 10,000 mPa·s.

9. A coating composition according to claim 1, wherein p is at least two.

10. A coating composition according to claim 1, wherein n is a number from 1 to 4 and R₂, R₃, R₄ and R₅ are hydrogen.

11. A coating composition according to claim 1, wherein the substituted vinyl dioxolane monomer is 2-vinyl-4-hydroxymethyl-1,3-dioxolane (HMVD) or 2-vinyl-4-hydroxybutyl-1,3-dioxolane (HBVD) or a blend thereof.

12. A coating composition according to claim 1, wherein the substituted vinyl dioxolane monomer is HBVD and the polyisocyanate is a 1,6-hexamethylene diisocyanate based polyisocyanate.

13. A coating composition according to claim 1, wherein the coating composition is sprayable,

14. A coating composition according to claim 13, wherein the viscosity is from about 10 to about 150 mPa·s.

15. A coating composition according to claim 14, wherein the viscosity is from about 20 to about 150 mPa•s.

16. A coating composition according to claim 1, wherein the vinyl dioxolane is HBVD and the polyisocyanate is a 1,6-hexamethylene diisocyanate based polyisocyanate having a viscosity at 23°C of from about 90 to about 250 mPa•s.

17. A coating composition according to claim 13, wherein the viscosity of the oligomer at 23°C is from about 90 to about 250 mPa·s.

18. A coating composition according to claim 1, further comprising at least one reactive diluent.

19. A coating composition according to claim 18, wherein the reactive diluent is present at from about 1 to about 50% by weight.

20. A coating composition according to claim 19, wherein the reactive diluent is present at from about 10 to about 30% by weight.

21. A coating composition according to claim 20, wherein the reactive diluent is present at from about 5 to about 15% by weight.

22. A coating composition according to claim 19, wherein the reactive diluent comprises a vinyl group containing composition.

23. A coating composition according to claim 22, wherein the reactive diluent comprises trimethyl propane triacrylate.

24. A coating composition according to claim 18, wherein the reactive diluent comprises at least one substituted vinyl dioxolane monomer having the formula: 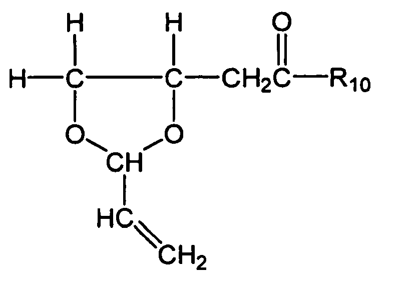 wherein R₁₀ is a mono- functional aliphatic based group having from 1 to about 10 carbon atoms.

25. A coating composition according to claim 24, wherein the mono-functional aliphatic groups are urethane, ester, and amide.

26. A coating composition according to claim 18, wherein the reactive diluent is HMVD or HBVD or a blend thereof.

27. A coating composition in accordance with claim 1, wherein the polymerization catalyst is cobalt octanoate, cobalt naphthenate, or a stannous composition.

28. A coating comprising the polymerization reaction product of a coating composition according to claims 1,13. and 18.

29. A method to reduce the viscosity of urethane based polymeric coating compositions in the absence of volatile organic components, the method comprising reacting a urethane prepolymer with at least one substituted vinyl dioxolane monomer to produce oligomers having a viscosity of from about 16 to about 150 mPa·s.

30. The method of claim 29, further comprising the step of adding a reactive diluent.

## Patentansprüche

1. Beschichtungszusammensetzung, die im Wesentlichen keine flüchtigen organischen Komponenten enthält, wobei die Zusammensetzung Folgendes umfasst:
(a) wenigstens ein Oligomer, bestehend aus dem Reaktionsprodukt von
(i) 2-Vinyl-4-hydroxymethyl-1,3-dioxolan (HMVD) oder wenigstens einem substituierten Vinyldioxolanmonomer mit der folgenden Formel: 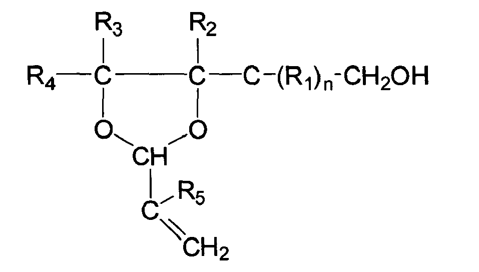 worin R₁ eine Alkylgruppe ist, n eine Zahl von 0 bis etwa 10 ist und R₂, R₃, R₄ und R₅ unabhängig voneinander Wasserstoff oder eine Alkylgruppe mit 1 bis etwa 10 Kohlenstoffatomen sind; und
(ii) wenigstens einem Isocyanat oder Polyisocyanat mit der folgenden Formel:
R₆(NCO)ₚ
worin R₆ eine aliphatische oder cycloaliphatische Alkylgruppe mit 1 bis etwa 10 Kohlenstoffatomen ist und p mindestens 1 beträgt, oder
wenigstens einem mit Isocyanat endverschlossenen aliphatischen Urethanprepolymer mit der folgenden Formel: 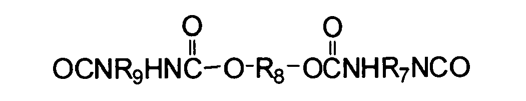 worin R₇, R₈ und R₉ unabhängig voneinander eine aliphatische oder cycloaliphatische Alkylgruppe mit 1 bis etwa 10 Kohlenstoffen sind; und
(b) wenigstens einen Katalysator, um die Polymerisation der Oligomere aus Schritt (a) zur Bildung einer Beschichtung einzuleiten.

2. Beschichtungszusammensetzung nach Anspruch 1, bei der das aliphatische Polyisocyanat Hexamethylendiisocyanat und/oder 4,4-Bis(cyclohexyl)methandüsocyanat und/oder Bis(4-isocyanato-cyclohexyl)methan und/oder Isophorondiisocyanat und/oder 1-Methylcyclohexan-2,4-diisocyanat und/oder 4,4',4"-Tricyclohexylmethantriisocyanat ist.

3. Beschichtungszusammensetzung nach Anspruch 1, bei der das aliphatische Polyisocyanat mindestens ein Polyisocyanat auf Basis von 1,6-Hexamethylendiisocyanat ist.

4. Beschichtungszusammensetzung nach Anspruch 3, bei der das Polyisocyanat auf Basis von 1,6-Hexamethylendiisocyanat bei 23°C eine Viskosität von etwa 90 bis etwa 250 mPa·s besitzt.

5. Beschichtungszusammensetzung nach Anspruch 3, bei der das Polyisocyanat auf Basis von 1,6-Hexamethylendiisocyanat bei 25°C eine Viskosität von etwa 1.300 bis etwa 2.200 mPa·s besitzt.

6. Beschichtungszusammensetzung nach Anspruch 1, bei der das mit Isocyanat endverschlossene aliphatische Urethanprepolymer ein Prepolymer ist, das aus mit aliphatischem Polyesterpolyol und/oder Polyetherpolyol umgesetzten Hexamethylendiisocyanat hergestellt ist.

7. Beschichtungszusammensetzung nach Anspruch 3, bei der das Polyisocyanat auf Basis von 1,6-Hexamethylendiisocyanat bei 25°C eine Viskosität von 1.300 bis 2.200 mPa·s oder bei 25°C eine Viskosität von etwa 5.000 bis etwa 10.000 mPa·s besitzt.

8. Beschichtungszusammensetzung nach Anspruch 1, bei der die Viskosität des Polyisocyanats bei etwa 25°C im Bereich von etwa 90 bis etwa 10.000 mPa·s liegt.

9. Beschichtungszusammensetzung nach Anspruch 1, bei der p mindestens zwei beträgt.

10. Beschichtungszusammensetzung nach Anspruch 1, bei der n eine Zahl von 1 bis 4 ist und R₂, R₃, R₄ und R₅ Wasserstoff sind.

11. Beschichtungszusammensetzung nach Anspruch 1, bei der das substituierte Vinyldioxolanmonomer 2-Vinyl-4-hydroxymethyl-1,3-dioxolan (HMVD) oder 2-Vinyl-4-hydroxybutyl-1,3-dioxolan (HBVD) oder eine Mischung davon ist.

12. Beschichtungszusammensetzung nach Anspruch 1, bei der das substituierte Vinyldioxolanmonomer HBVD ist und das Polyisocyanat ein Polyisocyanat auf Basis von 1,6-Hexamethylendiisocyanat ist.

13. Beschichtungszusammensetzung nach Anspruch 1, bei der die Beschichtungszusammensetzung sprühbar ist.

14. Beschichtungszusammensetzung nach Anspruch 13, bei der die Viskosität etwa 10 bis etwa 150 mPa·s beträgt.

15. Beschichtungszusammensetzung nach Anspruch 14, bei der die Viskosität etwa 20 bis etwa 150 mPa·s beträgt.

16. Beschichtungszusammensetzung nach Anspruch 1, bei der das Vinyldioxolan HBVD ist und das Polyisocyanat ein Polyisocyanat auf Basis von 1,6-Hexamethylendiisocyanat mit einer Viskosität von etwa 90 bis etwa 250 mPa·s bei 23°C ist.

17. Beschichtungszusammensetzung nach Anspruch 13, bei der die Viskosität des Oligomers bei 23°C etwa 90 bis etwa 250 mPa·s beträgt.

18. Beschichtungszusammensetzung nach Anspruch 1, die ferner mindestens ein reaktives Verdünnungsmittel umfasst.

19. Beschichtungszusammensetzung nach Anspruch 18, bei der das reaktive Verdünnungsmittel in einer Menge von etwa 1 bis etwa 50 Gew.-% vorliegt.

20. Beschichtungszusammensetzung nach Anspruch 19, bei der das reaktive Verdünnungsmittel in einer Menge von etwa 10 bis etwa 30 Gew.-% vorliegt.

21. Beschichtungszusammensetzung nach Anspruch 20, bei der das reaktive Verdünnungsmittel in einer Menge von etwa 5 bis etwa 15 Gew.-% vorliegt.

22. Beschichtungszusammensetzung nach Anspruch 19, bei der das reaktive Verdünnungsmittel eine Zusammensetzung umfasst, die eine Vinylgruppe enthält.

23. Beschichtungszusammensetzung nach Anspruch 22, bei der das reaktive Verdünnungsmittel Trimethylpropantriacrylat umfasst.

24. Beschichtungszusammensetzung nach Anspruch 18, bei der das reaktive Verdünnungsmittel mindestens ein substituiertes Vinyldioxolanmonomer mit der folgenden Formel umfasst: 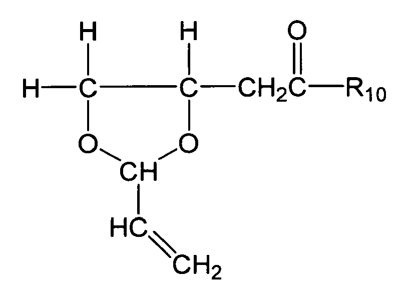 worin R₁₀ eine monofunktionelle Gruppe auf aliphatischer Basis mit 1 bis etwa 10 Kohlenstoffatomen ist.

25. Beschichtungszusammensetzung nach Anspruch 24, bei der die monofunktionellen aliphatischen Gruppen Urethan, Ester und Amid sind.

26. Beschichtungszusammensetzung nach Anspruch 18, bei der das reaktive Verdünnungsmittel HMVD oder HBVD oder eine Mischung davon ist.

27. Beschichtungszusammensetzung nach Anspruch 1, bei welcher der Polymerisationskatalysator Kobaltoctanoat, Kobaltnaphthenat oder eine Zinnzusammensetzung ist.

28. Beschichtung, die das Polymerisationsreaktionsprodukt einer Beschichtungszusammensetzung nach den Ansprüchen 1, 13 und 18 umfasst.

29. Verfahren zur Reduzierung der Viskosität von polymeren Beschichtungszusammensetzungen auf Urethanbasis in Abwesenheit von flüchtigen organischen Komponenten, wobei das Verfahren das Umsetzen eines Urethanprepolymers mit mindestens einem substituierten Vinyldioxolanmonomer umfasst, um Oligomere mit einer Viskosität von etwa 16 bis etwa 150 mPa•s herzustellen.

30. Verfahren nach Anspruch 29, das ferner den Schritt umfasst, bei dem ein reaktives Verdünnungsmittel hinzugefügt wird.

## Revendications

1. Composition de revêtement ne contenant en principe pas de composants organiques volatiles, la composition comprenant :
(a) au moins un oligomère qui est composé du produit de réaction de
(i) 2-vinyl-4-hydroxyméthyl-1,3-dioxolane (HMVD) ou au moins un monomère de vinyl-dioxolane substitué ayant la formule 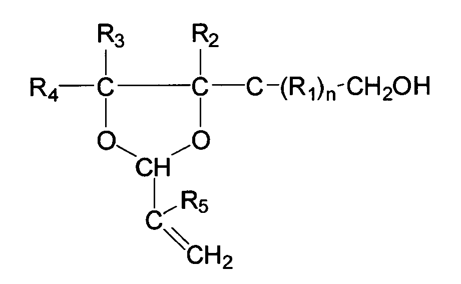 où R₁ est un groupe alkyle, n est un chiffre de 0 à environ 10, et R₂, R₃, R₄ et R₅ sont indépendamment un hydrogène ou un groupe alkyle ayant de 1 à environ 10 atomes de carbone ; et
(ii) au moins un isocyanate ou polyisocyanate ayant la formule
R₆(NCO)ₚ
où R6 est un groupe alkyle aliphatique ou cycloaliphatique ayant de 1 à environ 10 atomes de carbone, et p est au moins 1, ou
au moins un prépolymère uréthane aliphatique coiffé par un isocyanate ayant la formule 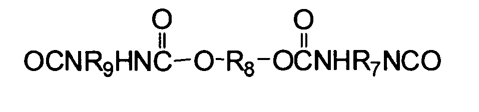 où R₇, R₈ et R₉ sont indépendamment un groupe alkyle aliphatique ou cycloaliphatique ayant de 1 à environ 10 atomes de carbone ; et
(b) au moins un système catalyseur pour amorcer la polymérisation des oligomères de l'étape (a) pour former un revêtement.

2. Composition de revêtement selon la revendication 1, dans laquelle le polyisocyanate aliphatique est au moins un hexaméthylène diisocyanate, un 4,4-bis(cyclohexyll)méthane diisocyanate, un bis(4-isocyanato-cyclohexyl)méthane, un isophorone diisocyanate, un 1-méthylcyclohexane-2,4-diisocyanate et un 4,4',4"-tricyclohexylméthane triisocyanate.

3. Composition de revêtement selon la revendication 1, dans laquelle le polyisocyanate est au moins un polyisocyanate basé sur un 1,6-hexaméthylène diisocyanate.

4. Composition de revêtement selon la revendication 3, dans laquelle le polyisocyanate basé sur un 1,6-hexaméthylène diisocyanate a une viscosité d'environ 90 à environ 250 mPa·s à 23°C.

5. Composition de revêtement selon la revendication 3, dans laquelle le polyisocyanate basé sur un 1,6-hexaméthylène diisocyanate a une viscosité d'environ 1.300 à environ 2.200 mPa·s à 25°C.

6. Composition de revêtement selon la revendication 1, dans laquelle le prépolymère uréthane aliphatique coiffé par un isocyanate est un prépolymère préparé depuis au moins hexaméthylène diisocyanate ayant réagi avec un polyester polyol ou un polyéther polyol.

7. Composition de revêtement selon la revendication 3, dans laquelle le polyisocyanate basé sur un 1,6-hexaméthylène diisocyanate a une viscosité d'environ 1.300 à 2.200 mPa·s à 25°C ou d'environ 5.000 à 10.000 mPa·s à 25°C.

8. Composition de revêtement selon la revendication 1, dans laquelle la viscosité du polyisocyanate à environ 25°C est de la plage d'environ 90 à environ 10.000 mPa·s.

9. Composition de revêtement selon la revendication 1, dans laquelle p est au moins égal à deux.

10. Composition de revêtement selon la revendication 1, dans laquelle n est un chiffre de 1 à 4, et R₂, R₃, R₄ et R₅ sont de l'hydrogène.

11. Composition de revêtement selon la revendication 1, dans laquelle le monomère de vinyl-dioxolane substitué est du 2-vinyl-4-hydroxyméthyl-1,3-dioxolane (HMVD) ou du 2-vinyl-4-hydroxybutyl-1,3-dioxolane (HBVD) ou un mélange de ceux-ci.

12. Composition de revêtement selon la revendication 1, dans laquelle le monomère de vinyl-dioxolane substitué est du HBVD et le polyisocyanate est un polyisocyanate basé sur du 1,6-hexaméthylène diisocyanate.

13. Composition de revêtement selon la revendication 1, dans laquelle la composition de revêtement est pulvérisable.

14. Composition de revêtement selon la revendication 13, dans laquelle la viscosité est d'environ 10 à environ 150 mPa·s.

15. Composition de revêtement selon la revendication 14, dans laquelle la viscosité est d'environ 20 à environ 150 mPa·s.

16. Composition de revêtement selon la revendication 1, dans laquelle le vinyl-dioxolane est du HBVD et le le polyisocyanate est un polyisocyanate basé sur du 1,6-hexaméthylène diisocyanate ayant une viscosité d'environ 90 à environ 250 mPa·s à 23°C.

17. Composition de revêtement selon la revendication 13, dans laquelle la viscosité de l'oligomère est d'environ 90 à environ 250 mPa·s à 23°C.

18. Composition de revêtement selon la revendication 1, contenant en outre au moins un diluant réactif.

19. Composition de revêtement selon la revendication 18, dans laquelle le diluant réactif est en présence d'environ 1 à environ 50 % en poids.

20. Composition de revêtement selon la revendication 19, dans laquelle le diluant réactif est en présence d'environ 10 à environ 30 % en poids.

21. Composition de revêtement selon la revendication 20, dans laquelle le diluant réactif est en présence d'environ 5 à environ 15 % en poids.

22. Composition de revêtement selon la revendication 19, dans laquelle le diluant réactif comprend une composition contenant un groupe vinyle.

23. Composition de revêtement selon la revendication 22, dans laquelle le diluant réactif comprend du triacrylate propane triméthyle.

24. Composition de revêtement selon la revendication 18, dans laquelle le diluant réactif comprend au moins un monomère de vinyl-dioxolane substitué ayant la formule 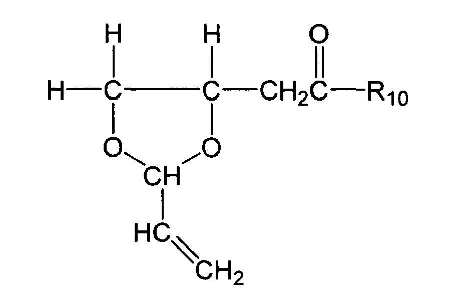 où R₁₀ est un groupe basé sur un aliphatique monofonctionnel ayant de 1 à environ 10 atomes de carbone.

25. Composition de revêtement selon la revendication 24, dans laquelle les groupes basés sur un aliphatique monofonctionnel sont de l'uréthane, de l'ester et de l'amide.

26. Composition de revêtement selon la revendication 18, dans laquelle le diluant réactif est du HMVD ou du HBVD ou un mélange de ceux-ci.

27. Composition de revêtement selon la revendication 1, dans laquelle le catalyseur de polymérisation est de l'octanoate de cobalt, du naphthénate de cobalt ou une composition d'étain.

28. Revêtement comportant le produit de réaction de polymérisation d'une composition de revêtement selon les revendications 1, 13, et 18.

29. Procédé pour réduire la viscosité de compositions de revêtement polymériques basées sur de l'uréthane en absence de composants organiques volatiles, le procédé comprenant la réaction d'un prépolymère d'uréthane avec au moins un monomère de vinyl-dioxolane substitué pour produire des oligomères ayant une viscosité d'environ 16 à environ 150 mPa•s.

30. Procédé selon la revendication 29, comprenant en outre l'étape d'ajouter un diluant réactif.
